# EUROPÄISCHE PATENTSCHRIFT

(11) **EP 3 492 709 B1**
(45) Veröffentlichungstag und Bekanntmachung des Hinweises auf die Patenterteilung: **25.11.2020**
(21) Anmeldenummer: 18209407.8
(22) Anmeldetag: 30.11.2018
(51) Int. Cl.: F01D 25/20, F02C 7/06, F02C 7/32, B64D 37/22, F01M 11/06, F16N 39/00

(54) **FLUGTRIEBWERK**
AIRCRAFT ENGINE
MOTEUR D'AÉRONEF

(30) Priorität: 30.11.2017 DE 102017128483
(43) Veröffentlichungstag der Anmeldung: 05.06.2019
(73) Patentinhaber: Rolls-Royce Deutschland Ltd & Co KG, 15827 Blankenfelde-Mahlow (DE)
(72) Erfinder: Kracht, Uwe, 15827 Blankenfelde-Mahlow (DE); Uhkötter, Stephan, 15827 Blankenfelde-Mahlow (DE); Astley, Thomas Philip, 15827 Blankenfelde-Mahlow (DE)
(74) Vertreter: Schmidt, Martin Michael

(56) Entgegenhaltungen:
- DE-A1- 3 137 947
- DE-T2- 69 102 468
- US-A1- 2010 212 281
- US-B1- 6 463 819

## Beschreibung

Die Erfindung betrifft ein Flugtriebwerk mit einem Ölkreislauf und mit einem über den Ölkreislauf mit Öl versorgbaren Getriebe gemäß der im Oberbegriff des Patentanspruches 1 näher definierten Art.

Aus der US 2016/0245117 A1 ist ein Schmiersystem für ein einem Bläser zugeordnetes Getriebe eines Mantelstrom-Triebwerkes bekannt. Das Schmiersystem umfasst eine Hilfspumpe, über die Öl bzw. Schmiermittel zu Lagern des Getriebes gefördert wird. Dem Getriebe zugeführtes Öl ist aus dem Getriebe in ein Ölreservoir führbar, von dem aus Öl über einen hydraulischen Leitungspfad direkt wieder in das Getriebe einleitbar ist.

Des Weiteren zeigt die US 2016/0032773 A1 ein System eines Turbinenmotors mit einer Turbinenmotorkomponente, mit einer Schmiermittelsammeleinheit und mit mehreren Schmiermittelkreisläufen. Die Schmiermittelsammeleinheit ist mit der Turbinenmotorkomponente verbunden, wobei über die Verbindung Schmiermittel von der Schmiermittelsammeleinheit zu der Turbinenmotorkomponente führbar ist. Die Schmiermittelkreisläufe sind zwischen der Schmiermittelsammeleinheit und der Turbinenmotorkomponente miteinander gekoppelt. Des Weiteren umfassen die Schmiermittelkreisläufe einen ersten Kreislauf und einen zweiten Kreislauf, der parallel zum ersten Kreislauf ausgeführt ist. Jeder der Schmiermittelkreisläufe weist eine Schmiermittelpumpe auf. Der erste Kreislauf und der zweite Kreislauf erhalten Schmiermittel von der Schmiermittelsammeleinheit und leiten das zugeführte Schmiermittel zu der als Getriebe ausgeführten Turbinenmotorkomponente weiter.

Mit den aus dem Stand der Technik bekannten Lösungen ist ein Getriebe eines Flugtriebwerkes nicht über den gesamten Betriebszustandsbereich eines Flugtriebwerkes in gewünschtem Umfang mit Öl bzw. Schmiermittel versorgbar. Dadurch besteht die Möglichkeit, dass das Getriebe während länger anhaltender

Unterversorgungsbetriebszustände in einem eine Funktionsweise dauerhaft beeinträchtigenden Umfang thermisch und mechanisch belastet wird.

Ein Flugtriebwerk mit einem Ölkreislauf und mit einem über den Ölkreislauf mit Öl versorgbaren Getriebe ist aus der US 2010/212281 A1 bekannt.

Der Erfindung liegt die Aufgabe zugrunde, ein Flugtriebwerk zur Verfügung zu stellen, bei welchem ein Getriebe über den gesamten Betriebsbereich des Flugtriebwerkes in ausreichendem Umfang mit Öl versorgbar ist.

Erfindungsgemäß wird diese Aufgabe mit einem Flugtriebwerk mit den Merkmalen des Patentanspruches 1 gelöst.

Das erfindungsgemäße Flugtriebwerk umfasst einen Ölkreislauf und ein über den Ölkreislauf mit Öl versorgbares Getriebe. Dem Getriebe zugeführtes Öl ist aus dem Getriebe in ein Ölreservoir führbar, von dem aus Öl über einen hydraulischen Leitungspfad direkt wieder in das Getriebe einleitbar ist. Das dem Ölreservoir zugeführte Öl ist unterhalb eines definierten Füllstandes des Ölreservoirs lediglich dem hydraulischen Leitungspfad zuführbar. Mit Erreichen des definierten Füllstandes des Ölreservoirs ist auch Öl in einen weiteren hydraulischen Leitungspfad einleitbar.

Aufgrund der gegenüber dem weiteren hydraulischen Leitungspfad erfindungsgemäßen priorisierten Versorgung des hydraulischen Leitungspfades mit Öl ausgehend vom Ölreservoir ist auf konstruktiv einfache Art und Weise bei gleichzeitig geringem Steuer- und Regelaufwand eine ausreichende Versorgung des Getriebes mit Öl über den gesamten Betriebsbereich eines Flugtriebwerkes gewährleistet. Dies ist selbst dann der Fall, wenn dem Getriebe ein Ölvolumenstrom zugeführt wird, der einen Anstieg des im Ölreservoir zwischengespeicherten Ölvolumens über den definierten Füllstand des Ölreservoirs verhindert.

Im Ölreservoir ist zwischen einem Einlass für das aus dem Getriebe ausgeführte Öl und der Öffnung des weiteren hydraulischen Leitungspfades eine Ölabscheideeinrichtung vorgesehen.

Mittels der Ölabscheideeinrichtung ist Öl aus einem aus dem Getriebe austretenden und über den Einlass in das Ölreservoir einströmenden Luft-ÖI-Gemisch abscheidbar. Das im Bereich der Ölabscheideeinrichtung abgeschiedene Öl wird im Ölreservoir gespeichert, während der im Bereich der Ölabscheideeinrichtung gereinigte und mit geringerer Ölbeladung aus der Ölabscheideeinrichtung austretende Ölvolumenstrom in Richtung des weiteren hydraulischen Leitungspfades geführt wird, solange der Ölstand im Ölreservoir unterhalb des definierten Füllstandes liegt. Damit wird wiederum auf einfache Art und Weise eine priorisierte Versorgung des hydraulischen Leitungspfades gegenüber dem weiteren hydraulischen Leitungspfad auf konstruktiv einfache Art und Weise bei gleichzeitig geringem Steuer- und Regelaufwand erreicht.

Bei einer konstruktiv einfachen und kostengünstigen Ausführungsform des erfindungsgemäßen Flugtriebwerkes ist eine Öffnung des hydraulischen Leitungspfades zur Entnahme von Öl aus dem Ölreservoir unterhalb des definierten Füllstandes des Ölreservoirs angeordnet. Damit wird die priorisierte Versorgung des hydraulischen Leitungspfades gegenüber dem weiteren hydraulischen Leitungspfad auf einfache Art und Weise realisiert.

Ist eine Öffnung des weiteren hydraulischen Leitungspfades zur Entnahme von Öl aus dem Ölreservoir auf dem Niveau des definierten Füllstandes des Ölreservoirs angeordnet, ist die priorisierte Versorgung des hydraulischen Leitungspfades gegenüber dem weiteren hydraulischen Leitungspfad wiederum auf konstruktiv einfache Art und Weise bei gleichzeitig geringem Steuer- und Regelaufwand gewährleistet.

Ist ein Überführungsbereich vorgesehen, über den ab Erreichen des definierten Füllstandes des Ölreservoirs Öl aus dem Ölreservoir in den weiteren hydraulischen Leitungspfad einleitbar ist, erfolgt wiederum eine Beaufschlagung des weiteren hydraulischen Leitungspfades mit Öl ausgehend vom Rücklauf des Getriebes erst dann, wenn der definierte Füllstand im Ölreservoir erreicht wird. Dadurch ist wiederum gewährleistet, dass lediglich dem hydraulischen Leitungspfad Öl ausgehend vom Rücklauf des Getriebes zugeführt wird, solange der definierte Füllstand des Ölreservoirs nicht erreicht ist. Erst mit Erreichen des definierten Füllstandes des Ölreservoirs wird dem Ölreservoir zugeführtes Öl in Richtung des Überführungsbereiches und damit des weiteren hydraulischen Leitungspfades geführt. Somit ist die priorisierte Versorgung des hydraulischen Leitungspfades ausgehend vom Rücklauf des Getriebes auf konstruktiv einfache Art und Weise bei gleichzeitig geringem Steuer- und Regelaufwand gewährleistet.

Dabei besteht die Möglichkeit, dass der Überleitungsbereich als weiteres Hydraulikreservoir, als Auffangrinne oder dgl. ausgeführt ist.

Eine Versorgung des Getriebes mit Öl über den hydraulischen Leitungspfad ist bei einer weiteren vorteilhaften Ausführungsform des erfindungsgemäßen Flugtriebwerkes dadurch realisiert, das der hydraulische Leitungspfad eine Pumpe aufweist, mittels der Öl aus dem Ölreservoir in das Getriebe förderbar ist.

Bei einer konstruktiv einfachen und bauraumgünstigen Weiterbildung des erfindungsgemäßen Flugtriebwerkes ist die Pumpe vom Getriebe antreibbar.

Ist die Wirkverbindung zwischen dem Getriebe und der Pumpe aktivierbar oder deaktivierbar, ist das erfindungsgemäße Flugtriebwerk während Betriebszustandsverläufen, während welchen dem Getriebe ausreichend Öl zuführbar ist und eine Beaufschlagung des Getriebes über den hydraulischen Leitungspfad nicht erforderlich ist, mit geringen Leistungsverlusten betreibbar. Dies resultiert aus der Tatsache, dass während solcher Betriebszustandsverläufe der Pumpenbetrieb durch Deaktivieren der Wirkverbindung zwischen dem Getriebe und der Pumpe auf einfache Art und Weise abschaltbar ist. Des Weiteren sind Leistungsverluste durch einen dauerhaften Pumpenbetrieb auf einfache Art und Weise während einer ausreichenden Versorgung des Getriebes mit Öl ohne zusätzliche Beaufschlagung des Getriebes mit Öl ausgehend vom hydraulischen Leitungspfad vermeidbar, wenn die Wirkverbindung zwischen dem Getriebe und der Pumpe nur bei Erkennen von Unterversorgungsbetriebszuständen des Getriebes aktiviert wird. Dabei ist des Weiteren von Vorteil, dass ein Verschleiß im Bereich der nur bedarfsweise betriebenen Pumpe minimiert ist, womit eine Lebensdauer der Pumpe im Vergleich zu einer dauerhaft angetriebenen Pumpe auf einfache Weise erhöht ist.

Dabei besteht beispielsweise die Möglichkeit, dass die Wirkverbindung zwischen der Pumpe und dem Getriebe eine Kupplung umfasst, die zum Aktivieren der Wirkverbindung geschlossen oder zum Deaktivieren der Wirkverbindung geöffnet wird.

Der hydraulische Leitungspfad umfasst im Bereich zwischen der Pumpe und dem Getriebe bei einer weiteren vorteilhaften Ausführungsform des erfindungsgemäßen Flugtriebwerkes eine Ventileinheit, über die von der Pumpe aus dem Ölreservoir gefördertes Öl wahlweise in Richtung des Getriebes oder zurück in das Ölreservoir führbar ist oder in den weiteren hydraulischen Leitungspfad einleitbar ist. Bei dieser Ausführungsform des erfindungsgemäßen Flugtriebwerkes ist die Wirkverbindung zwischen dem Getriebe und der Pumpe ohne entsprechende Mittel zum Aktivieren oder Deaktivieren der Wirkverbindung ausführbar, wobei die Pumpe im Betrieb des Flugtriebwerks dann dauerhaft vom Getriebe angetrieben wird. Über die Ventileinheit besteht auf einfache Art und Weise die Möglichkeit, den im Bereich des Rücklaufs des Getriebes austretenden Ölvolumenstrom während Unterversorgungsbetriebszuständen des Getriebes über den hydraulischen Leitungspfad direkt wieder in das Getriebe einzuleiten. Zusätzlich besteht während einer ausreichenden Versorgung des Getriebes mit Öl ohne zusätzliche Versorgung des Getriebes über den hydraulischen Leitungspfad auch die Möglichkeit, das in den hydraulischen Leitungspfad eingeleitete Ölvolumen im Bereich der Ventileinheit in den weiteren hydraulischen Leitungspfad abzuführen und somit eine Überversorgung des Getriebes zu vermeiden oder direkt wieder in das Ölreservoir einzuleiten und die gewünschte priorisierte Versorgung des hydraulischen Leitungspfades mit Hydraulikfluid gewährleisten zu können.

Bei einer sowohl in radialer Richtung als auch in axialer Richtung bauraumgünstigen Ausführungsform des erfindungsgemäßen Flugtriebwerkes ist das Getriebe radial innerhalb eines Kerntriebwerkstrombereiches des Flugtriebwerkes angeordnet.

Bei einer konstruktiv einfachen Ausführungsform des erfindungsgemäßen Flugtriebwerkes umfasst die Ölabscheideeinrichtung einen Prallabscheider.

Vorliegend werden unter dem Begriff Prallabscheider Einrichtungen subsumiert, mittels welchen vorzugsweise tropfenförmiges Öl aus einem Luft-ÖI-Volumenstrom dadurch abscheidbar ist, dass das eine höhere Trägheit aufweisende Öl beim An-, Um- und/oder Durchströmen solcher Einrichtungen, wie Prallbleche, Umlenkeinrichtungen, poröse Materialien oder dergleichen, auf Bereiche der Einrichtungen auftreffen, sich dort abscheiden und das Öl von den Einrichtungen in Richtung des hydraulischen Leitungspfades abfließt.

Dabei besteht die Möglichkeit, dass die Prallbleche geschlossen oder mit Durchlässen für den durch das Hydraulikfluidreservoir geführten Luft-ÖI-Volumenstrom ausgebildet sind und mit geeigneter Orientierung im Strömungsweg eines Luft-ÖI-Volumenstromes durch das Hydraulikfluidreservoir angeordnet sind. Dabei können die Durchlässe der Prallbleche Bohrungen, schlitzartige Ausnehmungen, eckige Durchbrüche oder dergleichen sein, die direkt vom Luft-ÖI-Volumenstrom durchströmbar sind oder welchen zumindest teilweise eine Abdeckung wie beispielsweise bei einem Käsehobel vorgeschaltet ist, die vor der Durchströmung des Durchlasses vom Luft-Öl-Volumenstrom zu umströmen ist. Zusätzlich besteht auch die Möglichkeit, dass die Prallbleche eben und oder gekrümmt ausgebildet sind und sich zumindest bereichsweise in den Innenraum des Ölreservoirs erstrecken. Die Krümmung der Prallbleche kann dabei in Bezug auf die Strömungsrichtung des Luft-Öl-Volumenstromes zwischen dem Einlass und der Öffnung des weiteren hydraulischen Leitungspfades konvex oder konkav ausgeführt sein. Dabei kann es vorgesehen sein, dass die Prallbleche ausgehend von einer oberen Begrenzungswand des Ölreservoirs in den Innenraum des Ölreservoirs vorkragen oder in definiertem Abstand zur oberen Begrenzungswand positioniert sind. Des Weiteren kann es auch vorgesehen sein, dass der aus dem Getriebe ausgeleitete Luft-Öl-Volumenstrom durch wenigstens einen Rohrkrümmer geleitet wird und das durch die Umlenkung des Luft-Öl-Volumenstromes innerhalb des Rohrkrümmers abgeschiedene Öl in Richtung des hydraulischen Leitungspfades abfließt.

Die Ölabscheideeinrichtung ist bei einer konstruktiv einfachen Ausführungsform des erfindungsgemäßen Flugtriebwerks mit einem porösen Medium ausgebildet, durch das ein aus dem Getriebe austretender Luft-ÖI-Volumenstrom ausgehend vom Einlass in Richtung der Öffnung des weiteren hydraulischen Leitungspfades führbar ist, wobei im Bereich des porösen Mediums aus dem Luft-Öl-Volumenstrom abgeschiedenes Öl in Richtung des Ölreservoirs abfließt.

Zwischen der Öffnung des hydraulischen Leitungspfades und der Öffnung des weiteren hydraulischen Leitungspfades ist bei einer weiteren konstruktiv einfachen Ausführungsform des erfindungsgemäßen Flugtriebwerkes eine Rückhalteeinrichtung vorgesehen. Die Rückhalteeinrichtung begrenzt zumindest eine Strömung von Öl im Ölreservoir ausgehend von einem der Öffnung des hydraulischen Leitungspfades zugeordneten Bereich des Ölreservoirs in Richtung der Öffnung des weiteren hydraulischen Leitungspfades. Mittels der Rückhalteeinrichtung wird auf einfache Art und Weise gewährleistet, dass im Ölreservoir vorhandenes Ölvolumen während ungünstiger Betriebszustandsverläufe des erfindungsgemäßen Flugtriebwerkes, beispielsweise während starker Abweichungen von einem Horizontalflug eines mit dem erfindungsgemäßen Flugtriebwerk ausgeführten Flugzeuges, nur in geringem Umfang aus dem Ölreservoir in Richtung des weiteren hydraulischen Leitungspfades aus dem Ölreservoir ausströmt, wenn der Ölstand im Ölreservoir unterhalb des definierten Füllstandes liegt.

Des Weiteren trennt die Rückhalteeinrichtung den der Öffnung des hydraulischen Leitungspfades zugeordneten Bereich des Innenraumes des Ölreservoirs von dem der Öffnung des weiteren hydraulischen Leitungspfades zugeordneten Bereich des Innenraumes des Ölreservoirs und verhindert somit ein Mitreißen und Verwirbeln von in dem der Öffnung des hydraulischen Leitungspfades zugeordnetem Bereich des Innenraumes des Ölreservoirs vorhandenem Öl durch den über den Einlass in das Ölreservoir einströmenden Luft-Öl-Volumenstrom.

Des Weiteren stellt der der Öffnung des hydraulischen Leitungspfades zugeordnete Bereich des Innenraumes des Ölreservoirs unterhalb der Rückhalteeinrichtung einen derart beruhigten Raum dar, dass eine gute Phasenentmischung im Bereich des dort gespeicherten Öls möglich ist und ein Aufsteigen von Luftblasen im gespeicherten Ölvolumen durch den durch das Ölreservoir geführten Luft-ÖI-Volumenstrom nicht beeinträchtig wird.

Ist ein Gehäusebereich des Ölreservoirs, der den der Öffnung des hydraulischen Leitungspfades zugeordneten Bereich des Innenraumes des Ölreservoirs begrenzt, zumindest bereichsweise trichterförmig ausgebildet, ist auf konstruktiv einfache Art und Weise gewährleistet, dass das im Ölreservoir gespeicherte Ölvolumen unabhängig von einer aktuellen Fluglage eines mit dem erfindungsgemäßen Flugtriebwerk ausgebildeten Flugzeuges aus dem Ölreservoir in den hydraulischen Leitungspfad ausgeleitet wird.

Bei einer konstruktiv einfachen Weiterbildung des erfindungsgemäßen Flugtriebwerkes weist die Rückhalteeinrichtung wenigstens eine zwischen der Öffnung des hydraulischen Leitungspfades und der Öffnung des weiteren hydraulischen Leitungspfades verlaufende und mit wenigstens einem Durchlass ausgebildete Rückhaltewand auf. Der Durchlass stellt eine Verbindung zwischen einem von der Rückhaltewand begrenzten Innenbereich des Ölreservoirs, in den der Leitungspfad mündet, und einem von der Rückhaltewand begrenzten weiteren Innenbereich des Ölreservoirs des Ölreservoirs dar, in den der weitere Leitungspfad mündet.

Ist die Rückhaltewand zumindest bereichsweise trichterförmig ausgebildet, ist wiederum mit geringem konstruktivem Aufwand gewährleistet, dass das vom Rücklauf des Getriebes in das Ölreservoir eingeleitete Öl im Wesentlichen unabhängig von der aktuellen Fluglage des Flugzeuges durch die Rückhalteeinrichtung hindurch in den Bereich des Innenraumes geleitet wird, der dem hydraulischen Leitungspfad zugeordnet ist.

Der trichterförmige Bereich des Gehäusebereiches des Ölreservoirs und der trichterförmige Bereich der Rückhaltewand sind bei einer vorteilhaften Weiterbildung des erfindungsgemäßen Flugtriebwerks so aufeinander abgestimmt, dass in dem der Öffnung des hydraulischen Leitungspfades zugeordneten Bereich des Innenraumes des Ölreservoirs während verschiedener von einem Horizontalflug eines mit dem Flugtriebwerk ausgeführten Flugzeuges abweichenden Fluglagen des Flugzeuges von der Rückhalteinrichtung ein definiertes Ölvolumen zurückhaltbar ist. Damit ist wiederum auf einfache Art und Weise gewährleistbar, dass im Ölreservoir ein für eine ausreichende Ölversorgung des Getriebes erforderliche Ölmenge vorhaltbar ist.

Die Rückhaltewand kann beispielsweise aus porösem Material hergestellt sein, durch das das Öl in Richtung der Öffnung des hydraulischen Leitungspfades führbar ist. Dabei besteht die Möglichkeit, dass der der Öffnung des hydraulischen Leitungspfades zugeordnete Bereich des Innenraumes des Ölreservoirs lediglich teilweise oder vollständig mit porösem Material befüllt ist. Darüber hinaus kann es auch vorgesehen sein, dass auch der der Öffnung des weiteren hydraulischen Leitungspfades zugeordnete Bereich des Innenraumes mit porösem Material befüllt ist. Dabei ist der Grad der Befüllung des Innenraumes des Ölreservoirs mit porösem Material der Rückhalteeinrichtung und der Ölabscheideeinrichtung jeweils unter Berücksichtigung des angestrebten Abscheidegrades der Ölabscheideeinrichtung, des Rückhaltevermögens der Rückhalteeinrichtung sowie des im Innenraum des Ölreservoirs durch das poröse Material verursachten Strömungswiderstandes auslegbar.

Ein Einlass des Ölreservoirs ist bei einer weiteren konstruktiv einfachen und mit geringem Steuer- und Regelaufwand betreibbaren Ausführungsform des erfindungsgemäßen Flugtriebwerks mit einem perforierten Zuführrohr der Ölabscheideeinrichtung verbunden. Das perforierte Zuführrohr umfasst einen im Wesentlichen oberhalb der Rückhalteeinrichtung verlaufenden Rohrbereich und einen zwischen dem Einlass und dem Rohrbereich angeordneten Rohrkrümmer. Im Bereich des Rohrkrümmers ist ein über den Einlass einströmender Luft-Öl-Volumenstrom umlenkbar und Öl aus dem Luft-ÖI-Volumenstrom abscheidbar. Der Rohrbereich ist mit mehreren Bohrungen ausgebildet, aus dem ein Luft-Öl-Volumenstrom und im perforierten Zuführrohr abgeschiedenes Öl ausleitbar ist.

Die Ölabscheideeinrichtung umfasst bei einer weiteren durch eine hohe Abscheideleistung im Bereich der Ölabscheideeinrichtung gekennzeichneten Ausführungsform des erfindungsgemäßen Flugtriebwerks eine Verlängerung eines Einlasses des Ölreservoirs für einen aus dem Getriebe ausleitbaren Luft-ÖI-Volumenstrom. Die Verlängerung des Einlasses erstreckt sich ausgehend von einer oberen Begrenzungswand in Richtung einer unteren Begrenzungswand des Ölreservoirs durch die Rückhalteeinrichtung in das Ölreservoir. Der über den Einlass in das Ölreservoir einströmende Luft-ÖI-Volumenstrom ist vom Einlass in das im Ölreservoir gespeicherte Ölvolumen einleitbar ist, wenn die Verlängerung des Einlasses in das im Ölreservoir gespeicherte Ölvolumen eintaucht.

Ist die Ölabscheideeinrichtung mit einem Zyklon ausgebildet, der gerade oder ausgehend von einem Einlass des Ölreservoirs für einen aus dem Getriebe ausleitbaren Luft-Öl-Volumenstrom in Richtung eines Auslasses des Zyklons zulaufend ausgebildet ist, ist eine gewünschte priorisierte Versorgung des hydraulischen Leitungspfades mit dem aus dem Getriebe ausgeleiteten Öl mit hoher Effizienz umsetzbar.

Weitere Vorteile und vorteilhafte Ausführungsformen des erfindungsgemäßen Flugtriebwerkes ergeben sich aus den Patentansprüchen und den nachfolgend unter Bezugnahme auf die Zeichnung prinzipmäßig beschriebenen Ausführungsbeispielen, wobei in der Beschreibung der Ausführungsbeispiele zugunsten der Übersichtlichkeit für bau- und funktionsgleiche Bauteile dieselben Bezugszeichen verwendet werden.

Es zeigt:
- Fig. 1: eine vereinfachte Schnittdarstellung eines Flugtriebwerks mit einem Bläser und mit einer Niederdruckturbine, wobei der Bläser über ein Getriebe mit der Niederdruckturbine in Verbindung steht;
- Fig. 2: eine stark schematisierte Querschnittansicht des Flugtriebwerkes entlang einer in Fig. 1 näher gekennzeichneten Schnittlinie II-II;
- Fig. 3: eine stark schematisierte Darstellung einer Längsschnittansicht eines in Fig. 1 näher gekennzeichneten Bereiches III des Flugtriebwerkes;
- Fig. 4: eine schematisierte Teildarstellung eines Ölkreislaufes des Flugtriebwerkes gemäß Fig. 1;
- Fig. 5: eine Fig. 4 entsprechende Darstellung einer weiteren Ausführungsform des Ölkreislaufes des Flugtriebwerkes gemäß Fig. 1;
- Fig. 6: eine stark schematisierte Darstellung eines Teils des Ölkreislaufes des Flugtriebwerkes mit einem Ölreservoir;
- Fig. 7: eine Fig. 6 entsprechende Darstellung eines weiteren Ausführungsbeispiels des Ölkreislaufes des Flugtriebwerkes mit einem Ölreservoir und mit einem weiteren Ölreservoir;
- Fig. 8 bis Fig. 24: verschiedene detailliertere Darstellungen des in Fig. 6 schematisiert dargestellten Bereiches des Flugtriebwerkes.

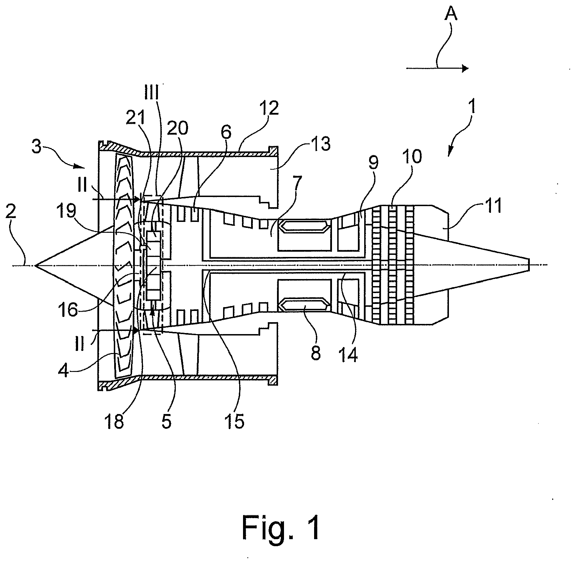

In Fig. 1 ist eine als Flugtriebwerk 1 eines Flugzeugs ausgeführte Strömungsmaschine mit einem Getriebe 5 gezeigt, das als Planetengetriebe ausgebildet ist. Das Flugtriebwerk 1 ist eine Turbomaschine, mit der das Getriebe 5 vorteilhaft kombiniert werden kann. Aus dem Folgenden ergibt sich eindeutig, dass das Getriebe 5 auch bei anderweitig ausgeführten Turbomaschinen, wie einem Propellerturbinenluftstrahltriebwerk bzw. einem Turboprop, eingesetzt werden kann.

Das Flugtriebwerk 1 weist eine Hauptdrehachse 2 auf. Des Weiteren umfasst das Flugtriebwerk 1 in axialer Strömungsrichtung A einen Lufteinlass 3, einen Bläser 4, das Getriebe 5, einen Niederdruckverdichter 6, einen Hochdruckverdichter 7, eine Verbrennungseinrichtung 8, eine Hochdruckturbine 9, eine Niederdruckturbine 10 und eine Ausströmdüse 11. Eine Triebwerksgondel 12 umgibt das Flugtriebwerk 1 und begrenzt den Lufteinlass 3.

Das Flugtriebwerk 1 arbeitet in herkömmlicher Weise, wobei in den Lufteinlass 3 eintretende Luft durch den Bläser 4 beschleunigt wird, um zwei Luftströme zu erzeugen. Ein erster Luftstrom strömt in den Zwischendruckverdichter 6 und ein zweiter Luftstrom wird durch einen Nebenstromkanal 13 bzw. Bypasskanal geführt, um einen Antriebsschub bereitzustellen. Der Niederdruckverdichter 6 komprimiert den ihm zugeführten Luftstrom, bevor die Luft im Bereich des Hochdruckverdichters 7 weiter verdichtet wird.

Die aus dem Hochdruckverdichter 7 ausströmende verdichtete Luft wird in die Verbrennungseinrichtung 8 eingeleitet, wo eine Vermischung mit Kraftstoff erfolgt und das Kraftstoff-Luft-Gemisch verbrannt wird. Die entstehenden heißen Verbrennungsprodukte expandieren und treiben dabei die Hochdruckturbine 9 und die Niederdruckturbine 10 an, bevor sie über die Ausströmdüse 11 ausgeführt werden, um einen zusätzlichen Antriebsschub bereitzustellen. Die Hochdruckturbine 9 und die Niederdruckturbine 10 treiben mittels einer Hochdruckwelle 14 bzw. einer Niederdruckwelle 15 den Hochdruckverdichter 7 bzw. den Niederdruckverdichter 6 an. Die die Niederdruckturbine 10 mit dem Niederdruckverdichter 6 koppelnde Niederdruckwelle 15 ist über das ein Untersetzungsgetriebe darstellende Getriebe 5 mit dem Bläser 4 gekoppelt. Ein über die Niederdruckwelle 15 am Getriebe 5 anliegendes Antriebsmoment wird der Standübersetzung der Getriebes 5 entsprechend angehoben und einer Bläserwelle 16 zugeführt. Wenn der Bläser 4 von der Niederdruckturbine 10 angetrieben wird, wird die Drehzahl der Niederdruckwelle 15 der Übersetzung des Getriebes 5 entsprechend reduziert und die Bläserwelle 16 sowie der Bläser 4 mit dieser reduzierten Drehzahl und mit einem gegenüber dem an der Niederdruckwelle 15 anliegenden Drehmoment erhöhten Drehmoment angetrieben.

Bei der in Fig. 1 gezeigten Ausführung des Getriebes 5 ist ein Sonnenrad des Getriebes 5 drehfest mit der Niederdruckwelle 15 und ein Planetenträger des Getriebes 5 drehfest mit der Bläserwelle 16 verbunden. Ein Hohlrad des Getriebes 5 ist gehäusefest angebunden. Somit liegt eine so genannte epizyklische Ausführung des Getriebes 5 vor. Unabhängig davon kann das Getriebe 5 auch eine andere Ausführung eines Planetengetriebes aufweisen.

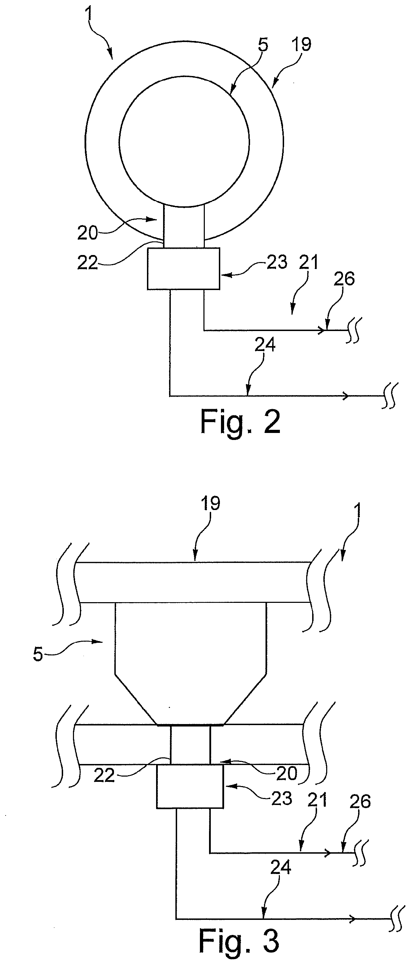

Fig. 2 zeigt eine stark schematisierte Teilquerschnittansicht des Flugtriebwerkes 1 entlang der in Fig. 1 näher gekennzeichneten Schnittlinie II-II. Aus der Darstellung gemäß Fig. 2 geht hervor, dass das Getriebe 5 innerhalb des Kerntriebwerkstrombereiches 19 des Flugtriebwerkes 1 angeordnet ist. Ein Rücklauf 20 des Getriebes 5, über den in das Getriebe 5 eingeleitetes Ölvolumen einem Ölkreislauf 21 des Flugtriebwerkes 1 zuführbar ist, ist durch eine den Kerntriebwerkstrombereich 19 radial durchgreifende Strebe 22 mit einem radial außerhalb des Kerntriebwerkstrombereiches 19 angeordneten Teil des Ölkreislaufes 21 verbunden. Des Weiteren zeigt Fig. 3 eine schematisierte Längsschnittansicht eines in Fig. 1 näher gekennzeichneten Bereiches III, innerhalb welchem das Getriebe 5 angeordnet ist.

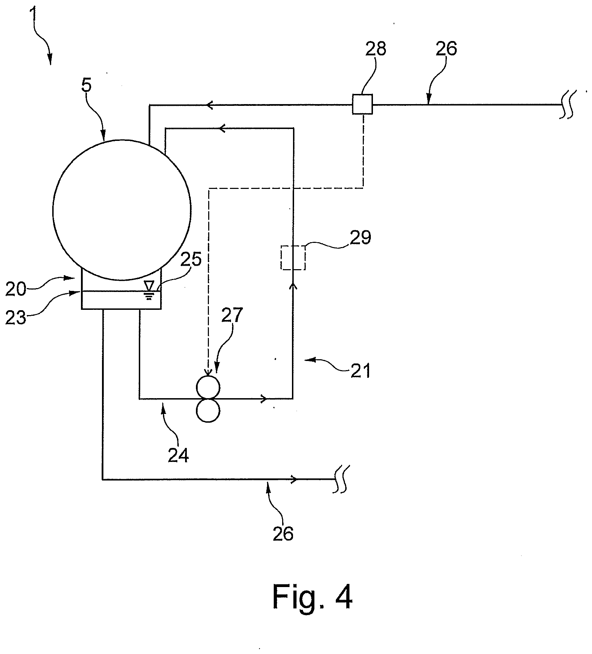

Zusätzlich ist in Fig. 4 eine schematisierte Teilansicht des Ölkreislaufes 21 des Flugtriebwerkes 1 dargestellt. Die Darstellung gemäß Fig. 4 umfasst sowohl einen Zulaufbereich des Getriebes 5 als auch den Rücklauf 20 des Getriebes 5. Der Rücklauf 20 des Getriebes 5 steht vorliegend mit einem Ölreservoir 23 in Wirkverbindung, von dem aus Öl über einen hydraulischen Leitungspfad 24 aus dem Ölreservoir 23 direkt wieder in das Getriebe 5 einleitbar ist.

Dabei ist es vorgesehen, dass das dem Ölreservoir 23 zugeführte Öl unterhalb eines definierten Füllstandes 25 des Ölreservoirs 23 aus dem Ölreservoir 23 lediglich in Richtung des hydraulischen Leitungspfades 24 weitergeleitet wird. Mit Erreichen des definierten Füllstandes 25 des Ölreservoirs 23 wird ausgehend vom Ölreservoir 23 Öl auch in einen weiteren hydraulischen Leitungspfad 26 eingeleitet.

Der hydraulische Leitungspfad 24 ist vorliegend mit einer Pumpe 27 ausgebildet, die im Förderbetrieb Öl aus dem Ölreservoir 23 ansaugt und über den hydraulischen Leitungspfad 24 wieder direkt in das Getriebe 5 fördert. Der weitere hydraulische Leitungspfad 26 entspricht vorliegend im Wesentlichen einem Hauptölkreislauf des Flugtriebwerkes 1, über den verschiedene Bereiche des Flugtriebwerkes 1, wie das Getriebe 5 und Lagereinheiten des Flugtriebwerkes 1 mit Öl beaufschlagt werden.

Die Pumpe 27 wird vorliegend über das Getriebe 5 angetrieben, wobei die Wirkverbindung zwischen dem Getriebe 5 und der Pumpe 27 schaltbar ausgeführt ist. Dabei wird die Pumpe 27 nur dann vom Getriebe 5 angetrieben, wenn ausgehend vom weiteren Leitungspfad 26 eine unzureichende Versorgung mit Öl erkannt wird. Ein solcher Unterversorgungsbetriebszustand des Getriebes 5 ausgehend vom weiteren hydraulischen Leitungspfad 26 ist beispielsweise über einen Sensor 28 ermittelbar, mittels dem ein Zuführdruck oder ein Fluidvolumenstrom im Zuführbereich des Getriebes 5 des weiteren hydraulischen Leitungspfades 26 oder eine andere geeignete Betriebsgröße des Flugtriebwerkes 1 bestimmbar ist.

Zusätzlich kann es auch vorgesehen sein, dass die schaltbare Wirkverbindung zwischen dem Getriebe 5 und der Pumpe 27 in Abhängigkeit weiterer Betriebsgrößen des Flugtriebwerkes 1 aktiviert wird, anhand welchen ein Unterversorgungszustand des Getriebes 5 mit Öl ausgehend vom weiteren hydraulischen Leitungspfad 26 erkennbar ist.

Abweichend hierzu kann es auch vorgesehen sein, dass die Pumpe 27 elektrisch angetrieben wird, wobei der elektrische Antrieb der Pumpe 27 in gleichem Umfang wie die mechanische Wirkverbindung zwischen dem Getriebe 5 und der Pumpe 27 im Bedarfsfall aktiviert wird. Zusätzlich besteht auch die Möglichkeit, den hydraulischen Leitungspfad 24 mit einem Kühler 29 auszuführen, um das durch den hydraulischen Leitungspfad 24 zirkulierende Ölvolumen in gewünschtem Umfang temperieren zu können.

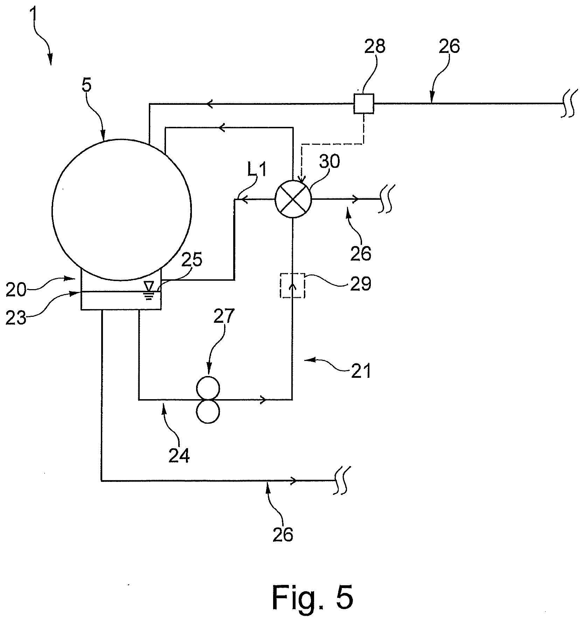

Eine Fig. 4 entsprechende Darstellung einer weiteren Ausführungsform des Flugtriebwerkes 1 zeigt Fig. 5, bei dem die Pumpe 27 dauerhaft vom Getriebe 5 oder von einem elektrischen Antrieb angetrieben wird. Dabei besteht wiederum die Möglichkeit, die Pumpe 27 mechanisch mit dem Getriebe 5 zu koppeln oder elektrisch anzutreiben. Diese Ausführungsform des Flugtriebwerkes 1 ist mit einer Ventileinheit 30 ausgeführt, die wiederum in Abhängigkeit einer oder mehrerer der vorgenannten Betriebsgrößen des Flugtriebwerkes 1 betätigbar ist, auf deren Basis ein Unterversorgungsbetriebszustand des Getriebes 5 ausgehend vom weiteren hydraulischen Leitungspfad 26 ermittelbar ist.

Im Normalbetriebszustand des Flugtriebwerkes 1, während dem das Getriebe 5 ausgehend vom hydraulischen Leitungspfad 26 in ausreichendem Umfang mit Öl versorgt wird, wird die Ventileinheit 30 in einen Betriebszustand versetzt, in dem von der Pumpe 27 aus dem Ölreservoir 23 entnommenes Ölvolumen in den weiteren hydraulischen Leitungspfad 26 eingespeist wird. Im Unterschied hierzu wird das von der Pumpe 27 geförderte Ölvolumen während eines Unterversorgungsbetriebszustandes des Getriebes 5 ausgehend vom weiteren hydraulischen Leitungspfad 26 im Bereich der Ventileinheit 30 in Richtung des Getriebes 5 weitergeleitet, um eine ausreichende Versorgung des Getriebes 5 mit Ölvolumen gewährleisten zu können.

Zusätzlich oder alternativ hierzu besteht auch die Möglichkeit, dass der von der Pumpe 27 in Richtung der Ventileinheit 30 geförderte Ölvolumenstrom zumindest teilweise über eine Leitung L1 von der Ventileinheit 30 in Richtung des Rücklaufs 20 bzw. des Ölreservoirs 23 geführt wird.

In Abhängigkeit des jeweils vorliegenden Anwendungsfalles besteht die Möglichkeit, dass das Ölreservoir 23, die Pumpe 27, die Ventileinheit 30 und/oder der Sensor 28 innerhalb oder außerhalb des Gehäuses des Getriebes 5 angeordnet sind, wobei bei der Anordnung im Gehäuse des Getriebes 5 jeweils durch Leckagen im Bereich des Ölreservoirs 23, der Pumpe 27, der Ventileinheit 30 und/oder des Sensors 28 verursachte Ölverluste vermieden werden, da die Leckageölvolumenströme innerhalb des Getriebes 5 aufgefangen werden und über den Rücklauf 20 des Getriebes 5 wieder in das Ölreservoir 23 eingeleitet werden.

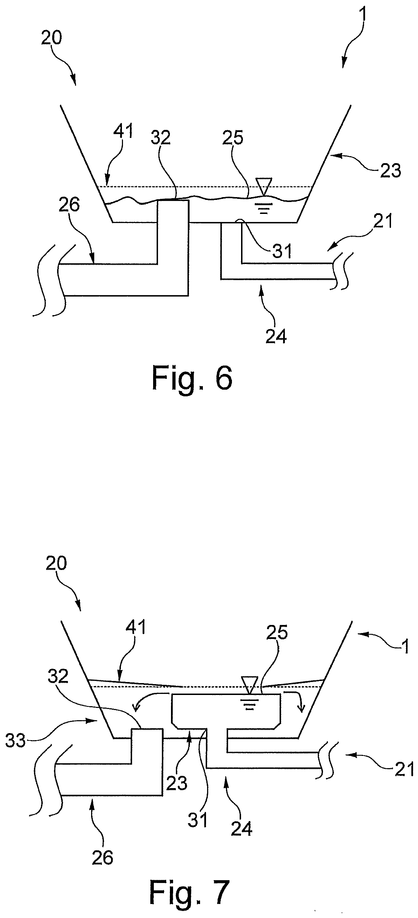

In Fig. 6 ist eine stark schematisierte Darstellung des Ölreservoirs 23 gezeigt. Bei dieser Ausführungsform des Ölreservoirs 23 ist eine Öffnung 31 des hydraulischen Leitungspfades 24 zur Entnahme von Öl aus dem Ölreservoir 23 unterhalb des definierten Füllstandes 25 im Ölreservoir 23 angeordnet. Des Weiteren ist eine Öffnung 32 des weiteren hydraulischen Leitungspfades 26 zur Entnahme von Öl aus dem Ölreservoir 23 auf dem Niveau des definierten Füllstandes 25 des Ölreservoirs 23 angeordnet.

Im Unterschied hierzu umfasst der weitere hydraulische Leitungspfad 26 bei dem in Fig. 7 dargestellten Ausführungsbeispiel des Ölkreislaufes 21 einen Überführungsbereich 33, in den ab Erreichen des definierten Füllstandes 25 des Ölreservoirs 23 Öl aus dem Ölreservoir 23 einleitbar ist. Bei der in Fig. 7 dargestellten Ausführungsform des Ölkreislaufes 21 ist das Ölreservoir 23 bei Erreichen des definierten Füllstandes 25 vollständig befüllt, so dass bei weiter einströmendem Öl in das Ölreservoir 23 das Ölreservoir 23 überläuft. Dann fließt aus dem Ölreservoir 23 ausströmendes Ölvolumen in Richtung des Überführungsbereich 33 des weiteren hydraulischen Leitungspfades 26 ab, in dem das Ölreservoir 23 bei dem in Fig. 7 gezeigten Ausführungsbeispiel vollumfänglich angeordnet ist.

Dabei ist der Zulauf des Ölreservoirs 23 und auch der Zulauf des Überführungsbereiches 33 derart ausgebildet, dass das über den Rücklauf 20 des Getriebes 5 in Richtung des Ölreservoirs 33 geführte Ölvolumen zunächst nur in das Ölreservoir 23 eingeleitet wird und ab Erreichen des definierten Füllstandes 25 auch in Richtung des Überführungsbereiches 33 abfließt.

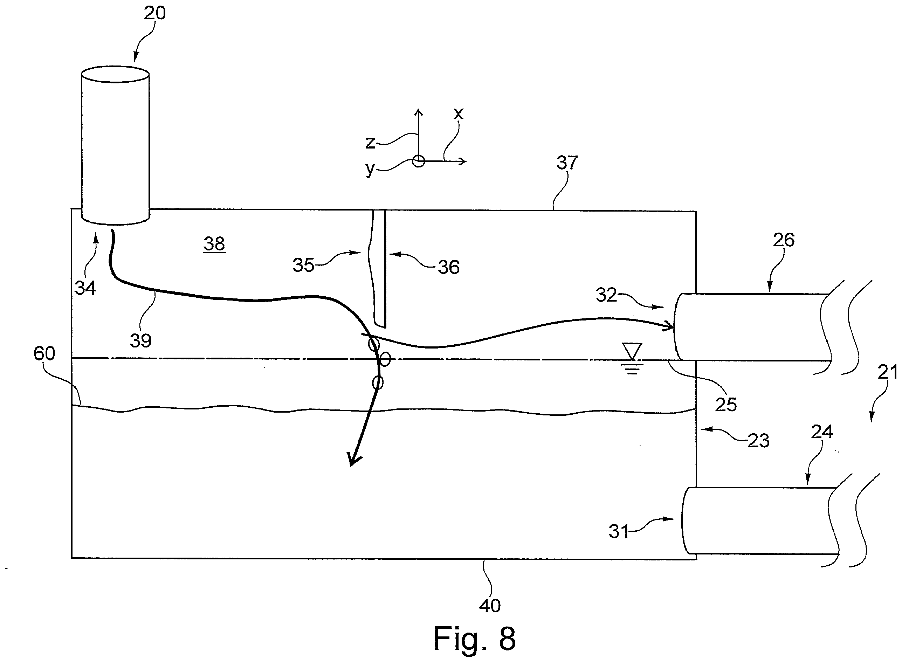

Fig. 8 bis Fig. 19B zeigen jeweils verschiedene Ausführungsformen des ÖIkreislaufes 21, die sich jeweils nur in Teilbereichen von dem in Fig. 6 gezeigten Ausführungsbeispiel des Ölkreislaufes 21 unterscheiden. Aus diesem Grund wird in der nachfolgenden Beschreibung zu Fig. 8 bis Fig. 19B jeweils lediglich auf die Unterschiede zwischen der jeweils betrachteten Ausführungsform und der Ausführung des Ölkreislaufes 21 gemäß Fig. 6 näher eingegangen und bezüglich der weiteren Funktionsweise auf die Beschreibung zu Fig. 6 verwiesen.

Bei dem in Fig. 8 dargestellten Ausführungsbeispiel des Ölkreislaufes 21 ist im Ölreservoir 23 zwischen einem Einlass 34 für das aus dem Getriebe 5 ausgeführte Öl und der Öffnung 32 des weiteren hydraulischen Leitungspfades 26 eine Ölabscheideeinrichtung 35 vorgesehen. Die Ölabscheideeinrichtung 35 umfasst einen Prallabscheider 36, der vorliegend als Prallwand ausgebildet ist. Die Prallwand 36 ist vorliegend parallel zu einer yz-Ebene des Ölreservoirs 23 verlaufend im Ölreservoir 23 angeordnet. Zusätzlich erstreckt sich die Prallwand 36 von einer in Einbaulage des Ölreservoirs 23 im Flugtriebwerk 1 oberen Begrenzungswand 37 in einen Innenraum 38 des Ölreservoirs 23. Dabei ist die Prallwand 36 in einem Strömungsweg von einem über den Einlass 34 in den Innenraum 38 des Ölreservoirs 23 einströmenden Luft-Öl-Volumenstrom 39 in Richtung der Öffnung 32 des weiteren hydraulischen Leitungspfades 26 angeordnet. Der Luft-ÖI-Volumenstrom 39 strömt während eines in Fig. 8 dargestellten Betriebszustandes des Ölkreislaufes 21, während dem die Öffnung 31 vollständig mit Öl bedeckt ist, bevorzugt in Richtung der Öffnung 32 des weiteren hydraulischen Leitungspfades 26.

Dabei scheiden sich im Bereich der Prallwand 36 im Luft-Öl-Volumenstrom 39 mitgeführte Öltropfen ab, wenn diese auf die Prallwand 36 auftreffen. Der sich im Betrieb an der dem Einlass 34 zugewandten Seite der Prallwand 36 bildende Ölfilm fließt aufgrund der am abgeschiedenen Ölvolumen angreifenden Schwerkraft in Richtung einer unteren Begrenzungswand 40 des Ölreservoirs ab. Stromab der Prallwand 36 strömt der Luft-Öl-Volumenstrom mit geringerer Ölbeladung in Richtung der Öffnung 32 des weiteren hydraulischen Leitungspfades 26 und durch diese aus dem Ölreservoir 23 aus.

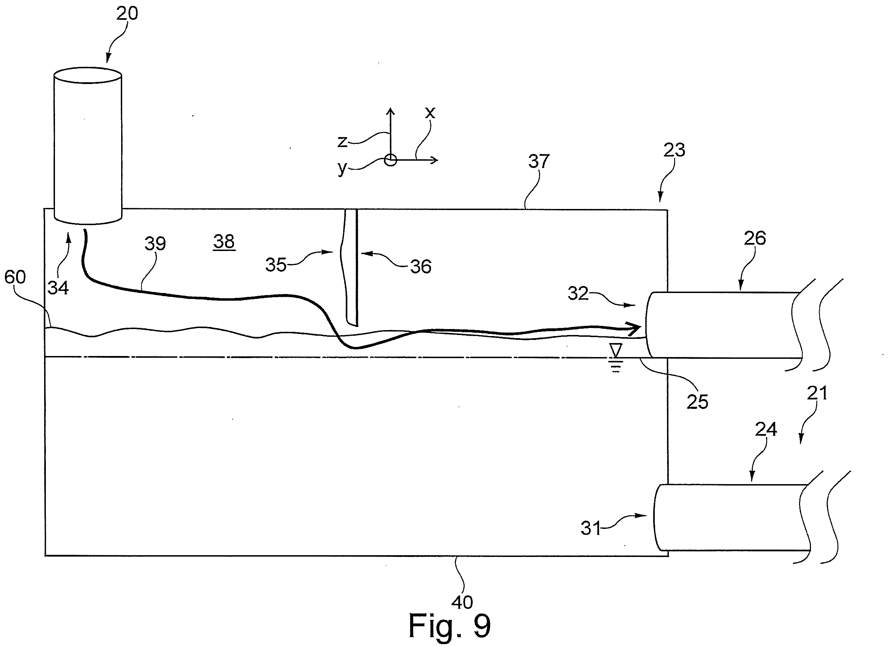

Über die Ölabscheideeinrichtung 35 wird erreicht, dass das vom Rücklauf 20 in das Ölreservoir 23 eingeleitete Öl bis zum Erreichen des definierten Füllstandes 25 im Wesentlichen lediglich dem hydraulischen Leitungspfad 24 zugeführt wird. Übersteigt der aktuelle Ölstand 60 des Ölreservoirs 23 den definierten Füllstand 25 wird neben dem Luft-Öl-Volumenstrom 39 zusätzlich auch Öl aus dem Ölreservoir 23 in den weiteren hydraulischen Leitungspfad 26 geführt. Dieser Betriebszustand des Ölkreislaufes 21 ist in Fig. 9 gezeigt.

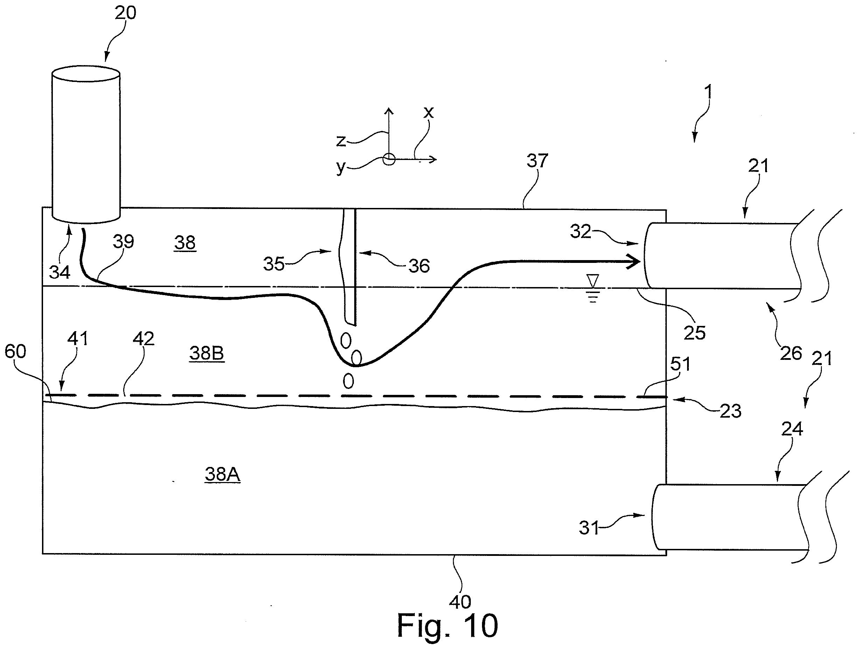

Bei dem in Fig. 10 gezeigten Ausführungsbeispiel des Ölkreislaufes 21 ist neben der Ölabscheideeinrichtung 35 zusätzlich eine Rückhalteeinrichtung 41 im Ölreservoir 23 angeordnet. Dabei ist die Rückhalteeinrichtung 41 parallel zu einer xy-Ebene des Ölreservoirs 23 verlaufend im Innenraum 38 des Ölreservoirs 23 angeordnet und unterteilt den Innenraum 38 in einen unteren Innenbereich 38A und in einen oberen Innenbereich 38B. Die Rückhalteeinrichtung 41 ist mit einer perforierten Rückhaltewand 51 ausgeführt, die im Wesentlichen horizontal im Ölreservoir 23 montiert ist und über die gesamte Fläche mit Durchlässen 42 ausgebildet ist. Über die Durchlässe 42 gelangt Öl aus dem Innenbereich 38B, der vorliegend mit dem Einlass 34 und der Öffnung 32 des weiteren hydraulischen Leitungspfades 26 verbunden ist, in den unteren Innenbereich 38A des Ölreservoirs 23, in den der hydraulische Leitungspfad 24 mündet. Über die perforierte Rückhaltewand 51 der Rückhalteeinrichtung 41 ist gewährleistet, dass im unteren Innenbereich 38A vorhandenes Ölvolumen während einer Schräglage des Ölreservoirs, bei Schwerelosigkeit oder bei im Flugbetrieb auftretenden und am Ölvolumen angreifenden negativen G-Kräften, beispielsweise während eines plötzlichen Absinkens der Flughöhe eines Flugzeuges, das Öl in unerwünschtem Umfang über die Öffnung 32 in Richtung des weiteren hydraulischen Leitungspfades 26 aus dem Ölreservoir 23 ausgeführt wird.

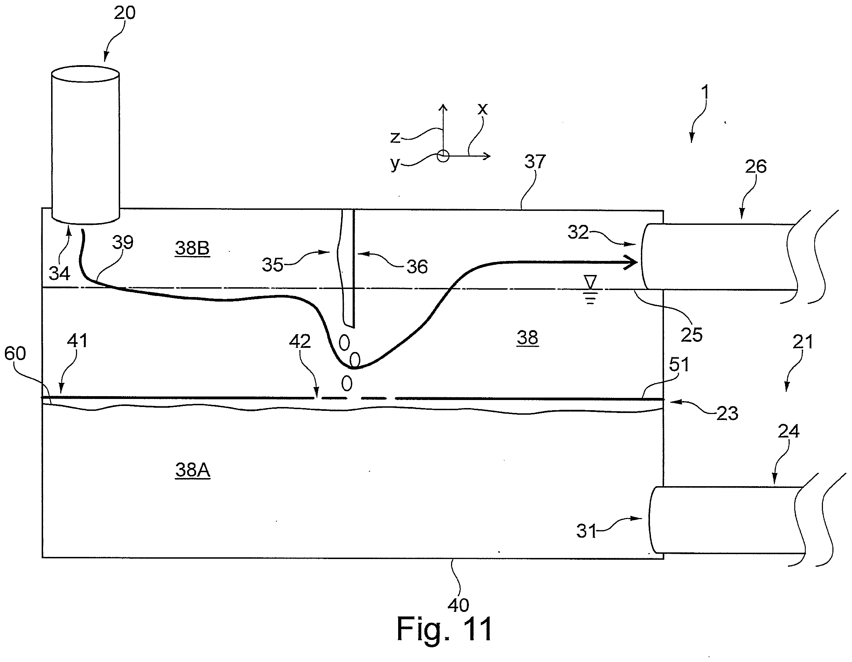

Im Unterschied zu der in Fig. 10 dargestellten Ausführungsform des Ölkreislaufes 21 ist die Rückhalteeinrichtung 41 bzw. die perforierte Rückhaltewand 51 bei der in Fig. 11 gezeigten Ausführungsform lediglich im Bereich unterhalb der Ölabscheideeinrichtung 35 mit Durchlässen 42 ausgebildet. Dadurch wird auf einfache Art und Weise ein höherer Rückhalteschutz für das im unteren Innenbereich 38A vorhandene Ölvolumen erzielt.

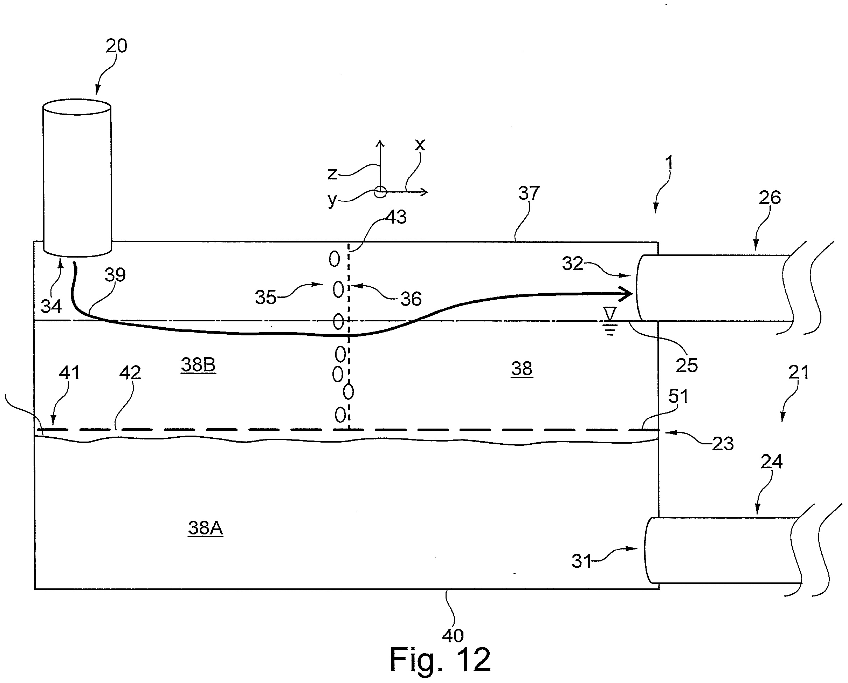

Eine weitere Ausführungsform des Ölkreislaufes 21 zeigt Fig. 12, bei der die Ölabscheideeinrichtung 35 eine sich von der oberen Begrenzungswand 37 bis zur Rückhalteeinrichtung 41 erstreckende perforierte Prallwand 36 aufweist. Die perforierte Prallwand 36 ist mit Aussparungen 43 ausgebildet, durch die der durch den Einlass 34 in den Innenraum 38 bzw. den oberen Innenbereich 38B einströmende Luft-Öl-Volumenstrom in Richtung der Öffnung 32 des weiteren hydraulischen Leitungspfades 26 führbar ist. Dabei sind die Aussparungen 43 derart dimensioniert, dass ausreichend Öl aus dem über den Einlass 34 einströmenden Luft-ÖI-Volumenstrom im Bereich der Ölabscheideeinrichtung 35 abgeschieden wird und das abgeschiedene Ölvolumen über die Rückhalteeinrichtung 41 in den unteren Innenbereich 38A abfließt.

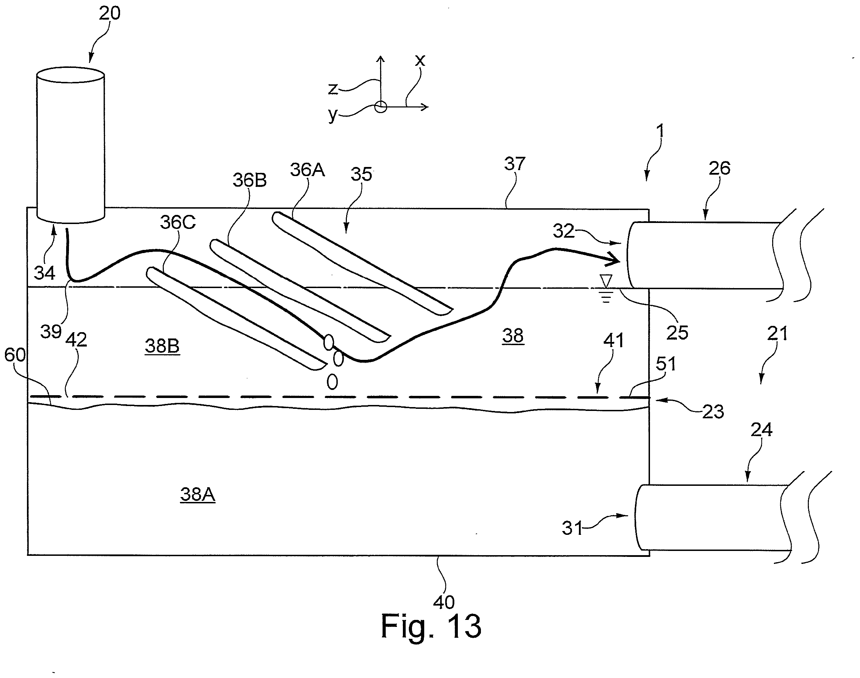

Bei dem in Fig. 13 gezeigten Ausführungsbeispiel des Ölkreislaufes 21 umfasst die Ölabscheideeinrichtung 35 mehrere gegenüber der yz-Ebene geneigte Prallwände 36A bis 36C. Dabei ist die Neigung der Prallwände 36A bis 36C derart, dass dem Einlass 34 zugewandte Bereiche der Prallwände 36A bis 36C in z-Richtung weiter von der Rückhalteeinrichtung 41 beabstandet sind, als zu dem Einlass 34 abgewandte Bereiche der Prallwände 36A bis 36C. Dadurch wird erreicht, dass der über den Einlass 34 in den Innenraum 38 bzw. in den oberen Innenbereich 38B des Ölreservoirs 23 einströmende Luft-Öl-Volumenstrom von der oberen Begrenzungswand 37 in Richtung der Rückhalteeinrichtung 41 und somit des unteren Innenbereiches 38A entlang der Prallwände 36A bis 36C geführt wird und das im Bereich der Prallwände 36A bis 36C abgeschiedene Ölvolumen zusätzlich zur angreifenden Gewichtskraft vom Luft-Öl-Volumenstrom in Richtung der Öffnung 31 des hydraulischen Leitungspfades 24 geführt wird.

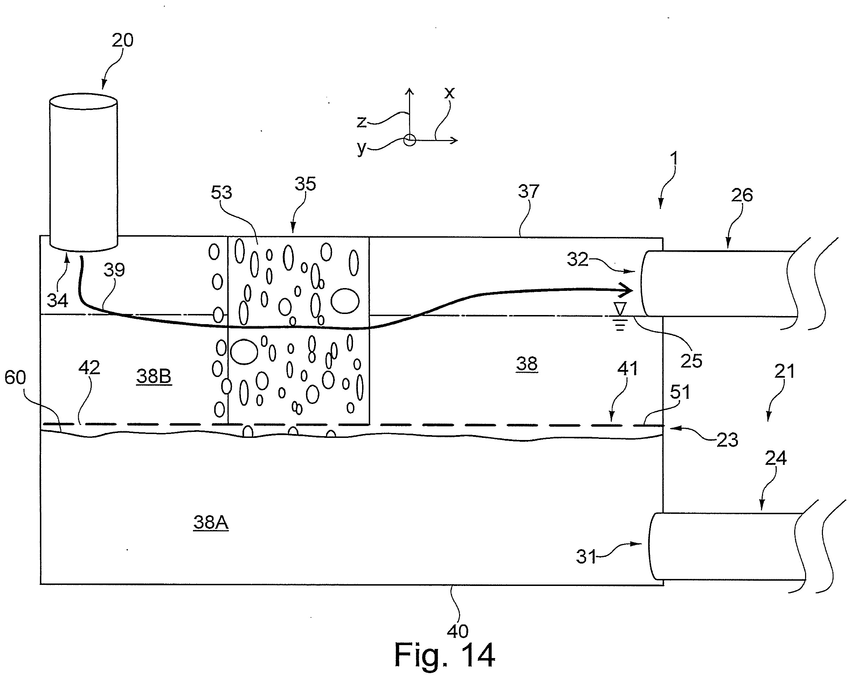

Die Ölabscheideeinrichtung 35 ist bei dem in Fig. 14 gezeigten Ausführungsbeispiel des Ölkreislaufes 21 mit einem porösen Medium 53 ausgebildet. Dabei ist das poröse Medium 53 derart ausgeführt, dass der Luft-Öl-Volumenstrom ausgehend vom Einlass 34 in Richtung der Öffnung 32 des weiteren hydraulischen Leitungspfades 26 durch das poröse Medium 53 führbar ist. Während der Durchströmung des porösen Mediums 53 wird ein großer Teil des vom Luft-Öl-Volumenstrom mitgeführten Öles abgeschieden, das aufgrund der angreifenden Schwerkraft in Richtung des unteren Innenbereiches 38A des Ölreservoirs 23 abfließt.

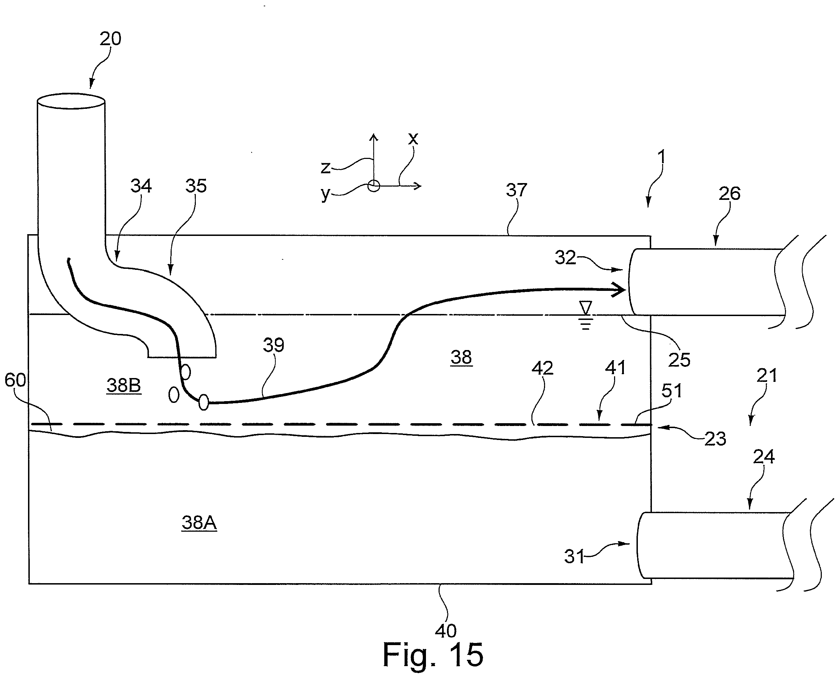

Das in Fig. 15 gezeigte Ausführungsbeispiel des Ölkreislaufes 21 ist mit einer Ölabscheideeinrichtung 35 ausgebildet, die einen mit dem Einlass 34 verbundenen und im Wesentlichen S-förmigen Leitungsbereich 44 als Prallabscheider 36 umfasst. Aufgrund der S-förmigen Ausgestaltung des Leitungsbereiches 44 und der dadurch erreichten zweimaligen Strömungsumlenkung scheiden sich an der Innenseite des Leitungsbereiches 44 die jeweils vom Luft-ÖI-Volumenstrom mitgeführten und eine höhere Trägheit als der Luftstrom aufweisenden Ölvolumentropfen ab und fließen aus dem Leitungsbereich 44 in der dargestellten Art und Weise in Richtung des unteren Innenbereiches 38A des Ölreservoirs 23 ab. Der aus dem Leitungsbereich ausströmende Luft-Öl-Volumenstrom, der gegenüber dem über den Einlass 34 in das Ölreservoir 23 eingeleiteten Luft-Öl-Volumenstrom eine geringere Ölbeladung aufweist, strömt in Richtung der Öffnung 32 des weiteren hydraulischen Leitungspfades 26.

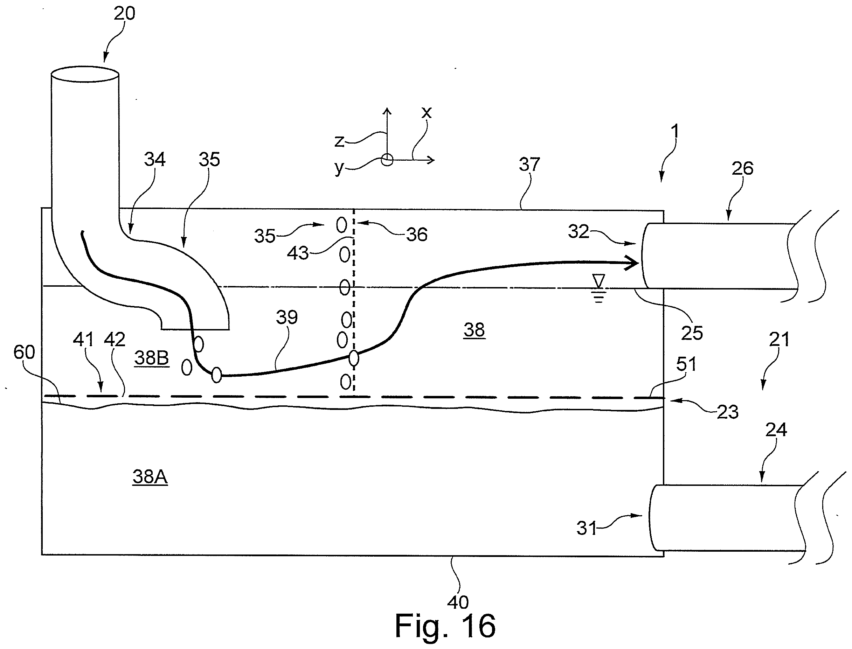

Fig. 16 zeigt eine Weiterbildung der in Fig. 15 dargestellten Ausführungsform des Ölkreislaufes 21, der zusätzlich mit einer zu Fig. 12 beschriebenen perforierten Prallwand 36 mit Aussparungen 43 ausgeführt ist.

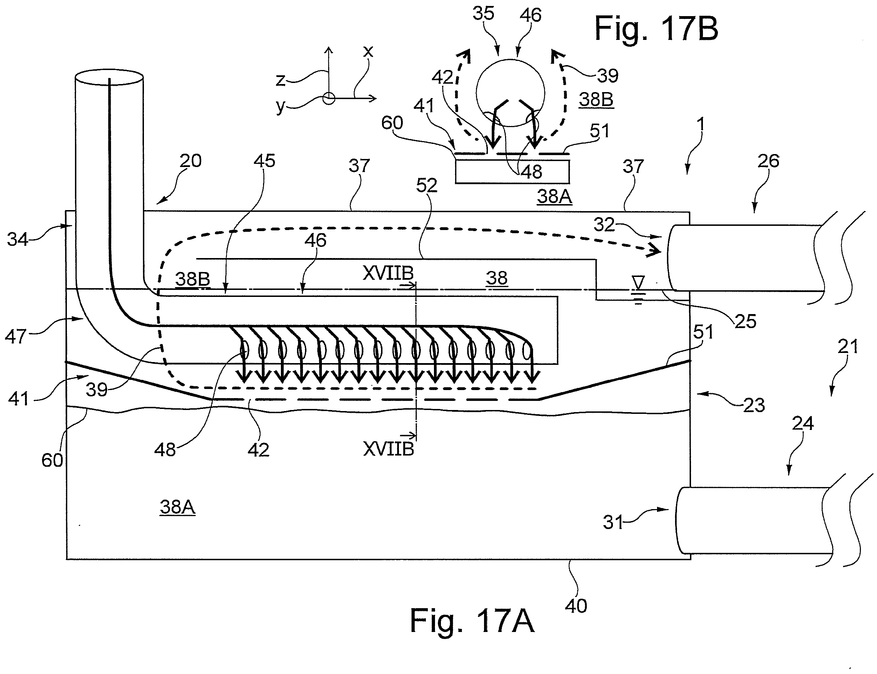

Bei dem in Fig. 17A dargestellten Ausführungsbeispiel des Ölkreislaufes 21 ist der Einlass 34 mit einem perforierten Zuführrohr 45 der Ölabscheideeinrichtung 35 verbunden. Fig. 17B zeigt eine Teilschnittansicht der Ölabscheideeinrichtung 35 entlang der in Fig. 17A näher gekennzeichneten Schnittlinie XVIIB-XVIIB. Das perforierte Zuführrohr 45 umfasst einen sich im Wesentlichen in x-Richtung im Innenraum 38 oberhalb der Rückhalteeinrichtung 41 verlaufenden Rohrbereich 46 und einen zwischen dem Einlass 34 und dem Rohrbereich 46 angeordneten Rohrkrümmer 47. Im Bereich des Rohrkrümmers 47 wird der über den Einlass 34 einströmende Luft-Öl-Volumenstrom im Wesentlichen um 90° umgelenkt und Öl aufgrund der höheren Trägheit aus dem Luft-Öl-Volumenstrom abgeschieden. Der Rohrbereich 46 ist auf seiner dem unteren Innenbereich 38A zugewandten Bereich mit mehreren Bohrungen bzw. Auslässen 48 ausgebildet, aus dem ein Luft-ÖI-Volumenstrom und im perforierten Zuführrohr 45 abgeschiedenes Öl ausgeleitet wird. Im Anschluss daran strömt ein im Vergleich zu dem über den Einlass 34 eingeleiteten Luft-Öl-Volumenstrom eine geringere Ölbeladung aufweisender Luft-ÖI-Volumenstrom zwischen der oberen Begrenzungswand 37 und einer sich im oberen Innenbereich 38B im Wesentlichen in X-Richtung erstreckenden Strömungsführungseinrichtung 52 in Richtung der Öffnung 32 des weiteren hydraulischen Leitungspfades 26.

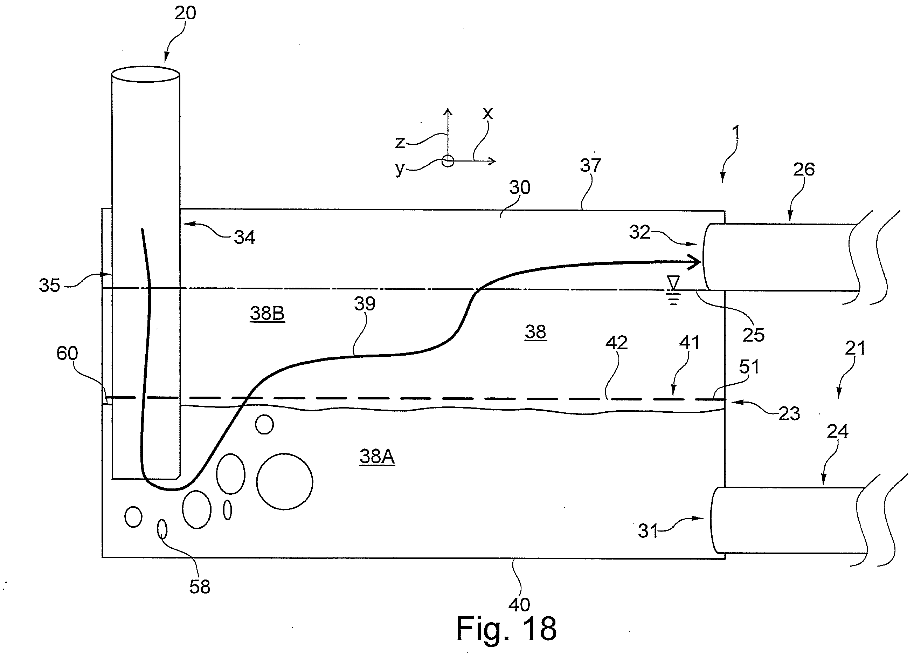

Bei der in Fig. 18 dargestellten Ausführungsform des Ölkreislaufes 21 bildet die Ölabscheideeinrichtung 35 eine Verlängerung des Einlasses 34 in z-Richtung aus, die sich ausgehend von der oberen Begrenzungswand 37 in Richtung der unteren Begrenzungswand 40 durch die Rückhalteeinrichtung 41 bis in den unteren Innenbereich 38A erstreckt. Dabei wird der über den Einlass 34 in das Ölreservoir 23 eingeleitete Luft-ÖI-Volumenstrom bei Vorliegen eines in Fig. 18 gezeigten Füllstandes 60 des Ölreservoirs 23 in das im Ölreservoir 23 gespeicherte Ölvolumen eingeleitet. Anschließend steigt die Luft aufgrund der geringeren Dichte in Form von Blasen 58 im gespeicherten Ölvolumen in Richtung der oberen Begrenzungswand 37 auf, um anschließend durch die Rückhalteeinrichtung 41 in Richtung der Öffnung 32 des weiteren hydraulischen Leitungspfades 26 zu strömen.

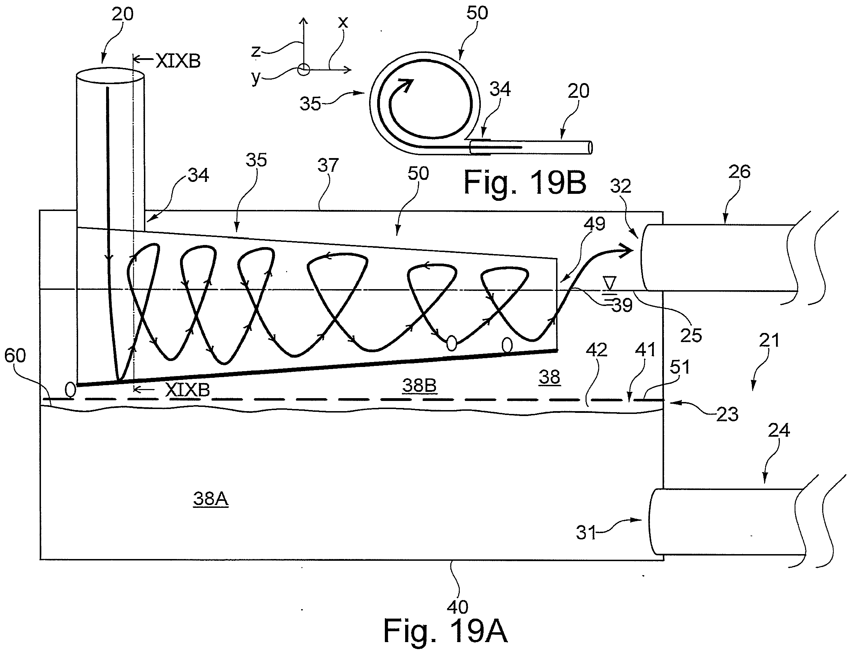

Eine weitere Ausführungsform des Ölkreislaufes 21 zeigt Fig. 19A, bei der die Ölabscheideeinrichtung 35 als Zyklon ausgebildet ist. Fig. 19B zeigt eines Schnittansicht des Einlasses 34 und des Zyklons 50 entlang einer in Fig. 19A näher gekennzeichneten Schnittlinie XIXB-XIXB. Dabei besteht die Möglichkeit, dass der Zyklon gerade oder wie dargestellt ausgehend vom Einlass 34 in Richtung eines Auslasses 49 des Zyklons 50 zulaufend ausgebildet ist. Der über den Einlass 34 direkt in den Zyklon 50 der Ölabscheideeinrichtung 35 einströmende Luft-ÖI-Volumenstrom durchströmt den Zyklon 50 in der in Fig. 19 dargestellten Art und Weise spiralförmig, wodurch sich im unteren Bereich des Zyklons 50 zunehmend Ölvolumen abscheidet und aus dem Zyklon 50 in Richtung des unteren Innenbereiches 38A des Ölreservoirs 23 abfließt. Der eine geringere Ölbeladung als der über den Einlass 34 in das Ölreservoir 23 eingeleitete Luft-ÖI-Volumenstrom aufweisende und aus dem Zyklon 50 ausströmende Luft-ÖI-Volumenstrom strömt aus dem Ölreservoir 23 in den weiteren hydraulischen Leitungspfad 26.

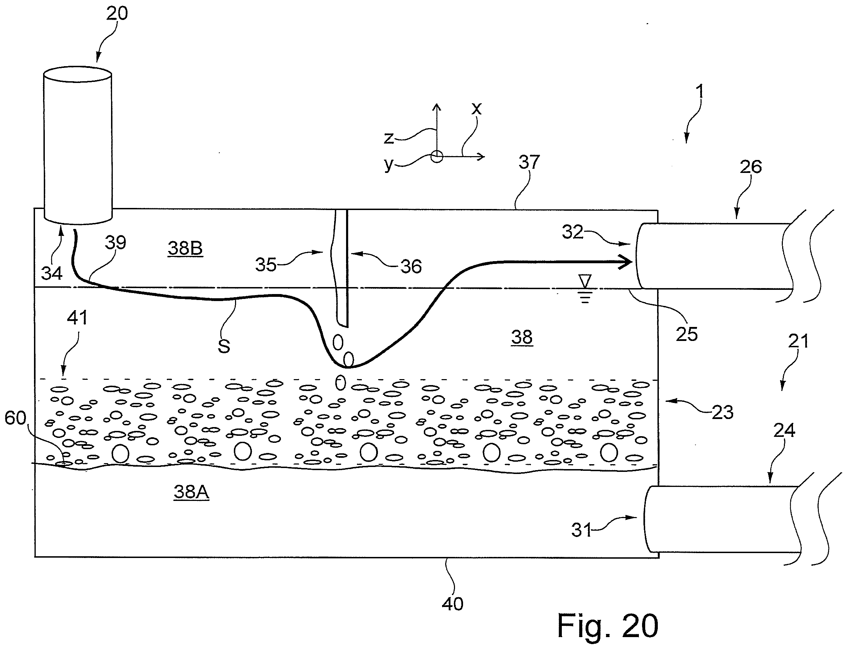

Fig. 20 zeigt eine weitere Ausführungsform des Ölkreislaufes 21, die im Wesentlichen dem in Fig. 10 gezeigten Ausführungsbeispiel entspricht und die sich lediglich im Bereich der Rückhalteeinrichtung 41 dahingehend unterscheidet, dass die Rückhalteeinrichtung 41 aus porösem Material hergestellt ist. Das poröse Material der Rückhalteinrichtung 41 erstreckt sich im Wesentlichen über den gesamten Querschnitt des Ölreservoirs 23 und trennt den Bereich 38A des Innenraumes 38 vom Bereich 38B in gewünschter Art und Weise und ist durchlässig für Öl. Dabei ist der Strömungswiderstand für das Öl im Bereich des porösen Materials so, dass Öl vom Bereich 38B in den Bereich 38A überführbar ist, jedoch ein spontanes Rückströmen großer Ölmengen aus dem Bereich 38A in den Bereich 38B wiederum verhindert wird.

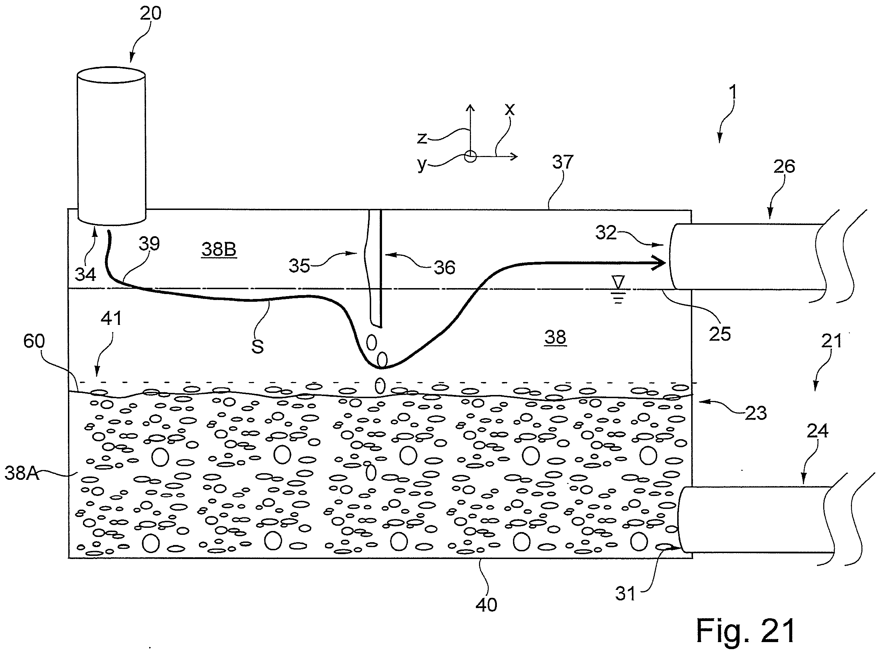

Ein weiteres Ausführungsbeispiel des Ölkreislaufes 21 ist in Fig. 21 dargestellt, das eine Weiterbildung der Ausführungsform des Ölkreislaufes 21 gemäß Fig. 21 ist und bei dem der gesamte Bereich 38A mit porösem Material der Rückhalteeinrichtung 41 befüllt ist.

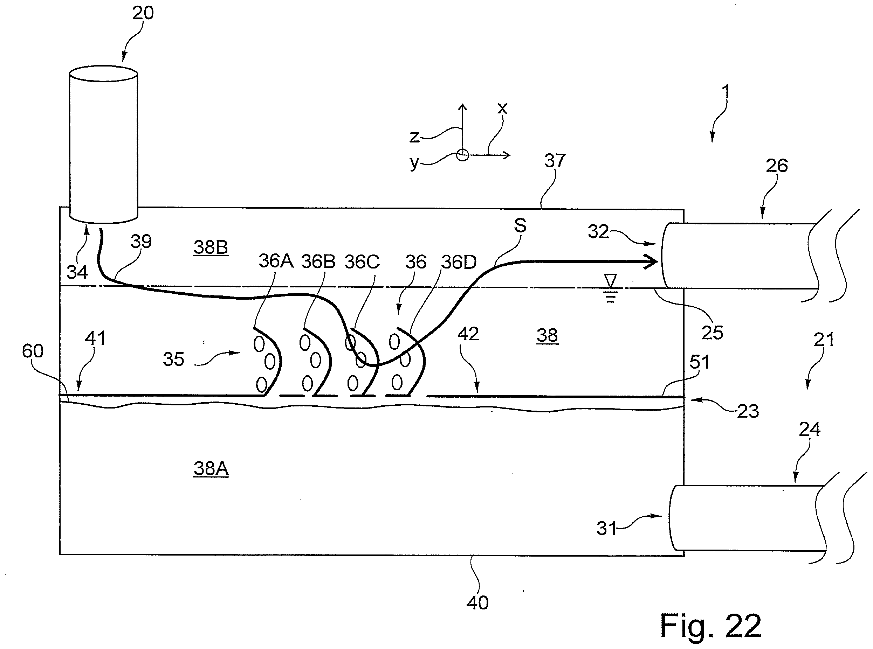

Fig. 22 zeigt eine Ausführungsform des Ölkreislaufes 21, die im Wesentlichen der in Fig. 11 gezeigten Ausführungsform entspricht und sich lediglich im Bereich der Ölabscheideeinrichtung 35 dahingehend von dieser Ausführung des Ölkreislaufes 21 unterscheidet, dass die Ölabscheideeinrichtung 35 mehrere zueinander beabstandete und gekrümmt ausgebildete Prallwände 36A bis 36D umfasst. Die Prallwände 36A bis 36D sind in Bezug auf die Strömungsrichtung S des Luft-ÖI-Volumenstromes im Ölreservoir 23 konkav ausgebildet und erstrecken sich ausgehend von der Rückhalteeinrichtung 41 in Richtung der oberen Begrenzungswand 37 des Ölreservoirs 23.

In Abhängigkeit des jeweils vorliegenden Anwendungsfalles kann es auch vorsehen sein, dass die Prallwände 36A bis 36D in Bezug auf die Strömungsrichtung S mit einer konvexen Krümmung ausgebildet sind und ausgehend von der oberen Begrenzungswand 37 in den Bereich 38B des Innenraumes 38 des Ölreservoirs 23 vorkragen. Darüber hinaus besteht auch die Möglichkeit, dass die Prallwände 36A bis 36D sowohl zur oberen Begrenzungswand 37 als auch zur Rückhalteeinrichtung 41 beabstandet im Bereich 38B des Innenraumes 38 des Ölreservoirs 23 positioniert sind.

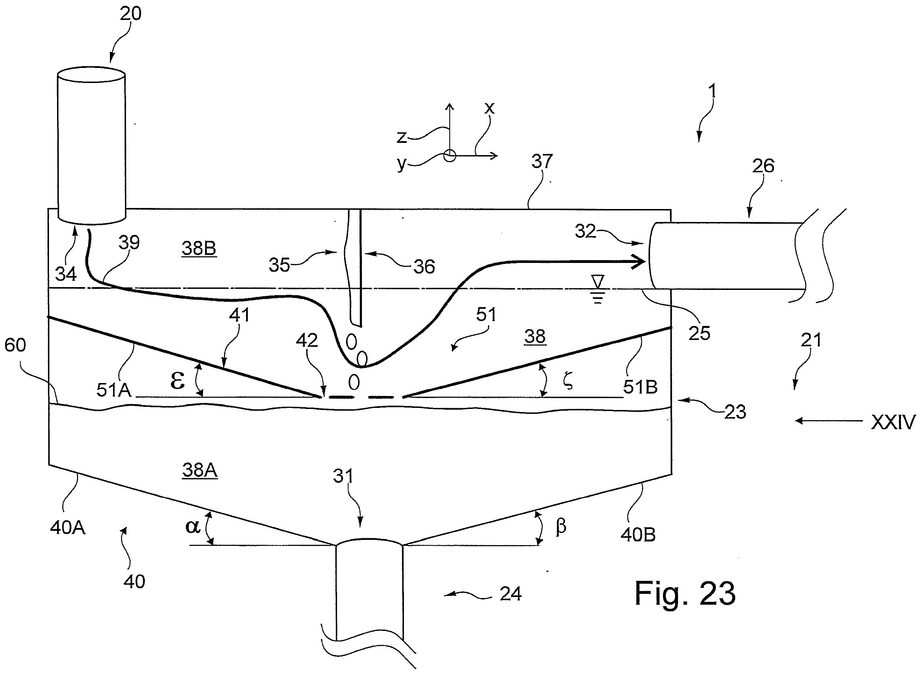

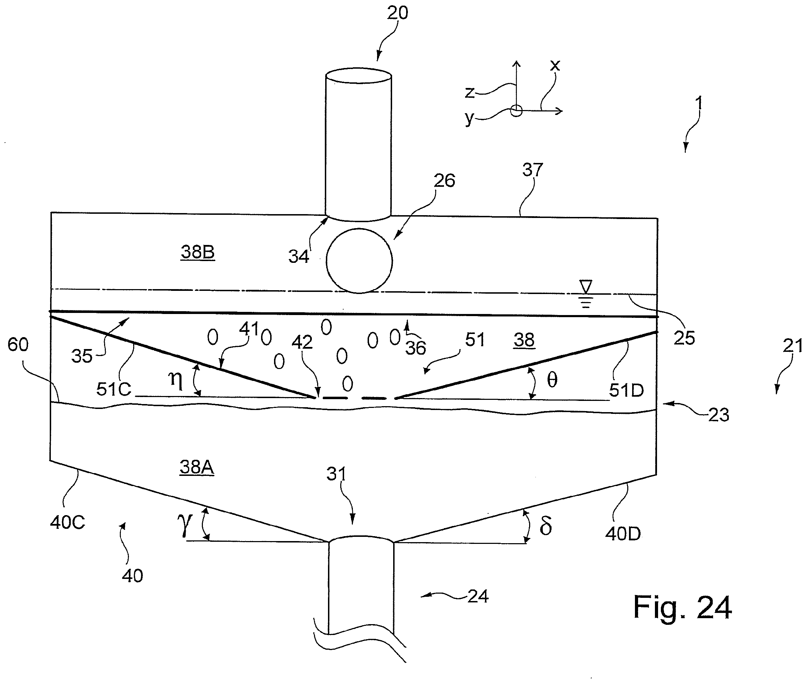

Die in Fig. 23 und Fig. 24 gezeigte Ausführungsform des Ölkreislaufes 21 weicht von den vorbeschriebenen Ausführungsbeispielen des Ölkreislaufes 21 sowohl im Bereich der Rückhalteinrichtung 41 als auch im Bereich der unteren Begrenzungswand 40 des Ölreservoirs 23 ab und ist mit einer Fig. 11 entsprechenden Ölabscheideeinrichtung 35 ausgebildet. Fig. 24 zeigt das Ölreservoir 23 aus einer in Fig. 23 angegebenen Ansicht XXIV. Des Weiteren ist das Ölreservoir 23 in Fig. 23 und Fig. 24 in Einbaulage im Flugtriebwerk 1 und während eines Horizontalfluges eines mit dem Flugtriebwerk 1 ausgeführten Flugzeuges dargestellt.

Die Rückhaltewand 51 der Rückhalteinrichtung 41 und die untere Begrenzungswand 40 des Ölreservoirs 23 sind trichterförmig ausgeführt. Dabei ist die Öffnung 31 des hydraulischen Leitungspfades 24 am tiefsten Punkt der unteren Begrenzungswand 40 des Ölreservoirs und direkt unterhalb des Durchlasses 42 der Rückhaltewand 51 vorgesehen, der wiederum direkt unterhalb der Prallwand des Prallabscheiders 36 angeordnet ist.

Aus den beiden Darstellungen gemäß Fig. 23 und Fig. 24 geht hervor, dass die untere Begrenzungswand 40 mehrere ebene Wandabschnitte 40A bis 40D aufweist, die jeweils einen Winkel α, β, γ bzw. δ mit der xy-Ebene einschließen und zueinander ebenfalls angewinkelt sind. In gleichem Umfang ist die Rückhaltewand 51 der Rückhalteeinrichtung 41 mit mehreren ebenen Rückhaltewandabschnitten 51A bis 51D ausgeführt, die wiederum Winkel ε, ζ, η bzw. θ mit der xy-Ebene einschließen und ebenfalls zueinander winkelig angeordnet sind.

Dabei werden die Winkel α bis θ der Wandabschnitte 40A bis 40D und der Rückhaltewandabschnitte 51A bis 51D gegenüber der xy-Ebene jeweils derart gewählt, dass Abweichungen einer aktuellen Fluglage des Flugzeuges vom Horizontalflug bzw. Nickbewegungen innerhalb eines definierten Nickwinkelbereiches des Flugzeuges und auch Rollbewegungen des Flugzeuges innerhalb eines definierten Rollwinkelbereiches des Flugzeuges keine wesentliche Rückströmung von im Bereich 38A des Innenraumes 38 des Ölreservoirs 23 gespeichertem Öl in den Bereich 38B oberhalb der Rückhalteeinrichtung 41 zur Folge haben. Damit ist das für eine ausreichende Ölversorgung des Getriebes 5 erforderliche Ölvolumen im Ölreservoir 23 in gewünschtem Umfang speicherbar und im Bedarfsfall zur Verfügung stellbar.

Dabei können die Nickwinkel α und β bzw. ε und ζ sowie die Rollwinkel γ und δ bzw. η und θ einander entsprechen oder in Abhängigkeit des jeweils vorliegenden Anwendungsfalles voneinander abweichen, um den Rückfluss von Öl aus dem Bereich 38A in Richtung des Bereiches 38B durch die Rückhalteinrichtung 41 hindurch während Flugbetriebssituationen des Flugzeuges zu vermeiden, die vom Horizontalflugbetriebszustand abweichen.

Des Weiteren kann es auch vorgesehen sein, dass der trichterförmige Bereich der Rückhaltewand 51 und/oder der unteren Begrenzungswand 40 als gerader Kegel ausgebildet ist oder lediglich zwei oder drei oder mehr als vier zueinander und gegenüber der xy-Ebene winkelig angestellte plane oder mit gleicher oder voneinander abweichender Krümmung ausgebildete Abschnitte umfasst. So kann es beispielsweise vorgesehen sein, dass die Rückhaltewand und/oder die untere Begrenzungswand eine Vielzahl an Facetten ähnlich wie ein geschliffener Diamant aufweist, wenn viele unterschiedliche Flugbetriebssituationen berücksichtigt werden sollen.

### Bezugszeichenliste

- 1: Strömungsmaschine; Flugtriebwerk
- 2: Hauptdrehachse
- 3: Lufteinlass
- 4: Bläser
- 5: Getriebe
- 6: Niederdruckverdichter
- 7: Hochdruckverdichter
- 8: Verbrennungseinrichtung
- 9: Hochdruckturbine
- 10: Niederdruckturbine
- 11: Ausströmdüse
- 12: Triebwerksgondel
- 13: Nebenstromkanal
- 14: Hochdruckwelle
- 15: Niederdruckwelle
- 16: Bläserwelle
- 18: Sonnenrad
- 19: Kerntriebwerkstrombereich
- 20: Rücklauf des Getriebes
- 21: Ölkreislauf
- 22: Strebe
- 23: Ölreservoir
- 24: hydraulischer Leitungspfad
- 25: definierter Füllstand des Ölreservoirs 23
- 26: weiterer hydraulischer Leitungspfad
- 27: Pumpe
- 28: Sensor
- 29: Kühler
- 30: Ventileinheit
- 31: Öffnung des hydraulischen Leitungspfades 24
- 32: Öffnung des weiteren hydraulischen Leitungspfades 26
- 33: Überführungsbereich des weiteren hydraulischen Leitungspfades 34 Einlass des Ölreservoirs 23
- 35: Ölabscheideeinrichtung
- 36: Prallabscheider
- 36A bis 36C: Prallwand
- 37: obere Begrenzungswand des Ölreservoirs 23
- 38: Innenraum des Ölreservoirs 23
- 38A: unterer Innenbereich des Innenraumes 38
- 38B: oberer Innenbereich des Innenraumes 38
- 39: Luft-Öl-Volumenstrom
- 40: untere Begrenzungswand des Ölreservoirs 23
- 40A bis 40D: Wandabschnitte der unteren Begrenzungswand
- 41: Rückhalteeinrichtung
- 42: Durchlass
- 43: Aussparung
- 44: Leitungsbereich
- 45: perforiertes Zuführrohr
- 46: Rohrbereich
- 47: Rohrkrümmer
- 48: Auslass
- 49: Auslass des Zyklons 50
- 50: Zyklon
- 51: perforierte Rückhaltewand
- 51A bis 51D: Rückhaltewandabschnitte
- 52: Strömungsführungseinrichtung
- 53: poröses Medium
- 58: Blasen
- 60: aktueller Ölstand des Hydraulikfluidreservoirs
- A: axiale Strömungsrichtung
- L1: Leitung
- S: Strömungsrichtung
- α, β, ε, ζ: Nickwinkel
- γ, δ, η, θ: Rollwinkel

## Patentansprüche

1. Flugtriebwerk (1) mit einem Ölkreislauf (21) und mit einem über den Ölkreislauf (21) mit Öl versorgbaren Getriebe (5), wobei dem Getriebe (5) zugeführtes Öl aus dem Getriebe (5) in ein Ölreservoir (23) führbar ist, von dem aus Öl über einen hydraulischen Leitungspfad (24) aus dem Ölreservoir (23) direkt wieder in das Getriebe (5) einleitbar ist, wobei das dem Ölreservoir (23) zugeführte Öl unterhalb eines definierten Füllstandes (25) des Ölreservoirs (23) lediglich dem hydraulischen Leitungspfad (24) zuführbar ist und mit Erreichen des definierten Füllstandes (25) des Ölreservoirs (23) auch in einen weiteren hydraulischen Leitungspfad (26) einleitbar ist,
**dadurch gekennzeichnet, dass**
im Ölreservoir (23) zwischen einem Einlass (34) für das aus dem Getriebe (5) ausgeführte Öl und der Öffnung (32) des weiteren hydraulischen Leitungspfades (26) eine Ölabscheideeinrichtung (35) vorgesehen ist..

2. Flugtriebwerk nach Anspruch 1, **dadurch gekennzeichnet, dass** eine Öffnung (32) des weiteren hydraulischen Leitungspfades (26) zur Entnahme von Öl aus dem Ölreservoir (23) auf dem Niveau des definierten Füllstandes (25) des Ölreservoirs (23) angeordnet ist.

3. Flugtriebwerk nach einem der Ansprüche 1 oder 2, **dadurch gekennzeichnet, dass** ein Überführungsbereich (33) vorgesehen ist, über den ab Erreichen des definierten Füllstandes (25) des Ölreservoirs (23) Öl aus dem Ölreservoir (23) in den weiteren hydraulischen Leitungspfad (26) einleitbar ist.

4. Flugtriebwerk nach einem der Ansprüche 1 bis 3, **dadurch gekennzeichnet, dass** der hydraulische Leitungspfad (24) eine Pumpe (27) aufweist, mittels der Öl aus dem Ölreservoir (23) in das Getriebe (5) förderbar ist.

5. Flugtriebwerk nach Anspruch 4, **dadurch gekennzeichnet, dass** die Pumpe (27) vom Getriebe (5) antreibbar ist.

6. Flugtriebwerk nach Anspruch 4 oder 5, **dadurch gekennzeichnet, dass** die Wirkverbindung zwischen dem Getriebe (5) und der Pumpe (27) aktivierbar oder deaktivierbar ist.

7. Flugtriebwerk nach einem der Ansprüche 4 bis 6, **dadurch gekennzeichnet, dass** der hydraulische Leitungspfad (24) im Bereich zwischen der Pumpe (27) und dem Getriebe (5) eine Ventileinheit (30) umfasst, über die von der Pumpe (27) aus dem Ölreservoir (23) gefördertes Öl wahlweise in Richtung des Getriebes (5) oder zurück in das Ölreservoir (23) führbar ist oder in den weiteren hydraulischen Leitungspfad (26) einleitbar ist.

8. Flugtriebwerk nach einem der Ansprüche 1 bis 7, **dadurch gekennzeichnet, dass** die Ölabscheideeinrichtung (35) einen Prallabscheider (36) umfasst.

9. Flugtriebwerk nach einem der Ansprüche 1 bis 8, **dadurch gekennzeichnet, dass** die Ölabscheideeinrichtung (35) mit einem porösen Medium (53) ausgebildet ist, durch das ein aus dem Getriebe (5) austretender Luft-ÖI-Volumenstrom ausgehend vom Einlass (34) in Richtung der Öffnung (32) des weiteren hydraulischen Leitungspfades (26) führbar ist, wobei im Bereich des porösen Mediums (53) aus dem Luft-ÖI-Volumenstrom abgeschiedenes Öl in Richtung des Ölreservoirs (23) abfließt.

10. Flugtriebwerk nach einem der Ansprüche 2 bis 9, **dadurch gekennzeichnet, dass** zwischen der Öffnung (31) des hydraulischen Leitungspfades (24) und der Öffnung (32) des weiteren hydraulischen Leitungspfades (26) eine Rückhalteeinrichtung (41) vorgesehen ist, die eine Strömung von Öl im Ölreservoir (23) ausgehend von einem der Öffnung (31) des hydraulischen Leitungspfades (24) zugeordneten Bereiches (38A) des Ölreservoirs (23) in Richtung der Öffnung (32) des weiteren hydraulischen Leitungspfades (26) zumindest begrenzt.

11. Flugtriebwerk nach Anspruch 10, **dadurch gekennzeichnet, dass** ein Gehäusebereich (40) des Ölreservoirs (23), der den der Öffnung (31) des hydraulischen Leitungspfades (24) zugeordneten Bereich (38A) des Innenraumes (38) des Ölreservoirs (23) begrenzt, zumindest bereichsweise trichterförmig ausgebildet ist.

12. Flugtriebwerk nach Anspruch 10 oder 11, **dadurch gekennzeichnet, dass** die Rückhalteeinrichtung (41) wenigstens eine zwischen einer Öffnung (31) des hydraulischen Leitungspfades (24) zur Entnahme von Öl aus dem Ölreservoir (23) und der Öffnung (32) des weiteren hydraulischen Leitungspfades (26) verlaufende und mit wenigstens einem Durchlass (42) ausgebildete Rückhaltewand (51) aufweist, wobei der Durchlass (42) jeweils eine Verbindung zwischen einem von der Rückhaltewand (51) begrenzten Innenbereich (38A) des Ölreservoirs (23), in den der Leitungspfad (24) mündet, und einem von der Rückhaltewand (51) begrenzten weiteren Innenbereich (38B) des Ölreservoirs (23) darstellt, in den der weitere Leitungspfad (26) mündet.

13. Flugtriebwerk nach Anspruch 12, **dadurch gekennzeichnet, dass** die Rückhaltewand (51) zumindest bereichsweise trichterförmig ausgebildet ist.

14. Flugtriebwerk nach Anspruch 13, **dadurch gekennzeichnet, dass** der trichterförmige Bereich des Gehäusebereiches (40) des Ölreservoirs (23) und der trichterförmige Bereich der Rückhaltewand (51) so aufeinander abgestimmt sind, dass in dem der Öffnung (31) des hydraulischen Leitungspfades (24) zugeordneten Bereich (38A) des Innenraumes (38) des Ölreservoirs (23) während verschiedener von einem Horizontalflug eines mit dem Flugtriebwerk (1) ausgeführten Flugzeuges abweichenden Fluglagen des Flugzeuges von der Rückhalteinrichtung (41) ein definiertes Ölvolumen zurückhaltbar ist.

15. Flugtriebwerk nach einem der Ansprüche 10 bis 14, **dadurch gekennzeichnet, dass** ein Einlass (34) des Ölreservoirs (23) mit einem perforierten Zuführrohr (45) der Ölabscheideeinrichtung (35) verbunden ist, wobei das perforierte Zuführrohr (45) einen im Wesentlichen oberhalb der Rückhalteeinrichtung (41) verlaufenden Rohrbereich (46) und einen zwischen dem Einlass (34) und dem Rohrbereich (46) angeordneten Rohrkrümmer (47) umfasst, in dessen Bereich ein über den Einlass (34) einströmender Luft-ÖI-Volumenstrom umgelenkt und Öl aus dem Luft-ÖI-Volumenstrom abscheidbar ist, während der Rohrbereich (46) mit mehreren Bohrungen (48) ausgebildet ist, aus dem ein Luft-ÖI-Volumenstrom und im perforierten Zuführrohr (45) abgeschiedenes Öl ausleitbar ist.

16. Flugtriebwerk nach einem der Ansprüche 10 bis 15, **dadurch gekennzeichnet, dass** die Ölabscheideeinrichtung (35) eine Verlängerung eines Einlasses (34) des Ölreservoirs (23) für einen aus dem Getriebe (5) ausleitbaren Luft-ÖI-Volumenstrom umfasst, die sich ausgehend von einer oberen Begrenzungswand (37) in Richtung einer unteren Begrenzungswand (40) des Ölreservoirs (23) durch die Rückhalteeinrichtung (41) in das Ölreservoir (23) erstreckt, wobei der über den Einlass (34) in das Ölreservoir (23) einströmende Luft-ÖI-Volumenstrom vom Einlass (34) in das im Ölreservoir (23) gespeicherte Ölvolumen einleitbar ist, wenn die Verlängerung des Einlasses (34) in das im Ölreservoir (23) gespeicherte Ölvolumen eintaucht.

17. Flugtriebwerk nach einem der Ansprüche 1 bis 16, **dadurch gekennzeichnet, dass** die Ölabscheideeinrichtung (35) mit einem Zyklon (50) ausgebildet ist, der gerade oder ausgehend von einem Einlass (34) des Ölreservoirs (23) für einen aus dem Getriebe (5) ausleitbaren Luft-ÖI-Volumenstrom in Richtung eines Auslasses (49) des Zyklons (50) zulaufend ausgebildet ist.

## Claims

1. Aircraft engine (1) having an oil circuit (21) and having a transmission (5) that can be supplied with oil via the oil circuit (21), wherein oil fed to the transmission (5) can be directed out of the transmission (5) into an oil reservoir (23), from which oil can be directed out of the oil reservoir (23) and introduced directly back into the transmission (5) via a hydraulic line path (24), wherein the oil fed to the oil reservoir (23) can only be fed to the hydraulic line path (24) below a defined filling level (25) of the oil reservoir (23) and, when the defined filling level (25) of the oil reservoir (23) is reached, it can also be introduced into a further hydraulic line path (26)
**characterized in that**
an oil separator device (35) is provided in the oil reservoir (23) between an inlet (34) for the oil discharged from the transmission (5) and the opening (32) of the further hydraulic line path (26).

2. Aircraft engine according to Claim 1, **characterized in that** an opening (32) of the further hydraulic line path (26) for the removal of oil from the oil reservoir (23) is arranged at the level of the defined filling level (25) of the oil reservoir (23).

3. Aircraft engine according to either of Claims 1 and 2, **characterized in that** a transfer region (33) is provided, via which oil can be introduced from the oil reservoir (23) into the further hydraulic line path (26) once the defined filling level (25) of the oil reservoir (23) has been reached.

4. Aircraft engine according to one of Claims 1 to 3, **characterized in that** the hydraulic line path (24) has a pump (27), by means of which oil can be pumped out of the oil reservoir (23) into the transmission (5).

5. Aircraft engine according to Claim 4, **characterized in that** the pump (27) can be driven by the transmission (5).

6. Aircraft engine according to Claim 4 or 5, **characterized in that** the operative connection between the transmission (5) and the pump (27) can be activated or deactivated.

7. Aircraft engine according to one of Claims 4 to 6, **characterized in that** the hydraulic line path (24) in the region between the pump (27) and the transmission (5) comprises a valve unit (30), by means of which oil pumped out of the oil reservoir (23) by the pump (27) can either be directed in the direction of the transmission (5) or back into the oil reservoir (23) or can be introduced into the further hydraulic line path (26).

8. Aircraft engine according to one of Claims 1 to 7, **characterized in that** the oil separator device (35) comprises an impact separator (36).

9. Aircraft engine according to one of Claims 1 to 8, **characterized in that** the oil separator device (35) is formed with a porous medium (53), through which an air-oil volume flow emerging from the transmission (5) can be passed, starting from the inlet (34), in the direction of the opening (32) of the further hydraulic line path (26), wherein oil separated from the air-oil volume flow in the region of the porous medium (53) flows off in the direction of the oil reservoir (23).

10. Aircraft engine according to one of Claims 2 to 9, **characterized in that** a retention device (41) is provided between the opening (31) of the hydraulic line path (24) and the opening (32) of the further hydraulic line path (26), said retention device at least limiting a flow of oil in the oil reservoir (23) from a region (38A) of the oil reservoir (23) associated with the opening (31) of the hydraulic line path (24) in the direction of the opening (32) of the further hydraulic line path (26).

11. Aircraft engine according to Claim 10, **characterized in that** a housing region (40) of the oil reservoir (23) which delimits that region (38A) of the interior (38) of the oil reservoir (23) which is associated with the opening (31) of the hydraulic line path (24) is of funnel-shaped design, at least in some region or regions.

12. Aircraft engine according to Claim 10 or 11, **characterized in that** the retention device (41) has at least one retaining wall (51), which extends between an opening (31) of the hydraulic line path (24) for the removal of oil from the oil reservoir (23) and the opening (32) of the further hydraulic line path (26) and is formed with at least one passage (42), wherein the passage (42) in each case forms a connection between an inner region (38A) of the oil reservoir (23), which is delimited by the retaining wall (51) and into which the line path (24) opens, and a further inner region (38B) of the oil reservoir (23), which is delimited by the retaining wall (51) and into which the further line path (26) opens.

13. Aircraft engine according to Claim 12, **characterized in that** the retaining wall (51) is of funnel-shaped design, at least in some region or regions.

14. Aircraft engine according to Claim 13, **characterized in that** the funnel-shaped region of the housing region (40) of the oil reservoir (23) and the funnel-shaped region of the retaining wall (51) are matched to one another in such a way that a defined oil volume can be retained by the retention device (41) **in that** region (38A) of the interior (38) of the oil reservoir (23) which is associated with the opening (31) of the hydraulic line path (24) in various attitudes of an aircraft that deviate from horizontal flight of the aircraft embodied with the aircraft engine (1).

15. Aircraft engine according to one of Claims 10 to 14, **characterized in that** an inlet (34) of the oil reservoir (23) is connected to a perforated feed pipe (45) of the oil separator device (35), wherein the perforated feed pipe (45) comprises a pipe region (46), which extends substantially above the retention device (41), and a pipe elbow (47), which is arranged between the inlet (34) and the pipe region (46) and in the region of which an air-oil volume flow flowing in via the inlet (34) is deflected and oil can be separated out of the air-oil volume flow, while the pipe region (46) is formed with a plurality of holes (48), from which an air-oil volume flow and oil separated in the perforated feed pipe (45) can be discharged.

16. Aircraft engine according to one of Claims 10 to 15, **characterized in that** the oil separator device (35) comprises an extension of an inlet (34) of the oil reservoir (23) for an air-oil volume flow that can be discharged from the transmission (5), said extension extending from an upper boundary wall (37) in the direction of a lower boundary wall (40) of the oil reservoir (23), through the retention device (41), into the oil reservoir (23), wherein the air-oil volume flow flowing into the oil reservoir (23) via the inlet (34) can be passed from the inlet (34) into the oil volume stored in the oil reservoir (23) when the extension of the inlet (34) dips into the oil volume stored in the oil reservoir (23).

17. Aircraft engine according to one of Claims 1 to 16, **characterized in that** the oil separator device (35) is formed with a cyclone (50), which is of straight design or designed to taper from an inlet (34) of the oil reservoir (23) for an air-oil volume flow that can be discharged from the transmission (5) in the direction of an outlet (49) of the cyclone (50).

## Revendications

1. Moteur d'aéronef (1), comprenant un circuit d'huile (21) et une transmission (5) pouvant être alimentée en huile par le circuit d'huile (21), dans lequel l'huile amenée à la transmission (5) peut être guidée de la transmission (5) à un réservoir d'huile (23) à partir duquel l'huile peut être directement réintroduite du réservoir d'huile (23) dans la transmission (5) en passant par un trajet de conduction hydraulique (24), dans lequel, au-dessous d'un niveau de remplissage défini (25) du réservoir d'huile (23), l'huile amenée au réservoir d'huile (23) ne peut être amenée qu'au trajet de conduction hydraulique (24), et lorsque le niveau de remplissage défini (25) du réservoir d'huile (23) est atteint, elle peut également être introduite sur un trajet de conduction hydraulique supplémentaire (26),
**caractérisé en ce que** dans le réservoir d'huile (23), un dispositif de séparation d'huile (35) est prévu entre une entrée (34) pour l'huile sortie de la transmission (5) et l'ouverture (32) du trajet de conduction hydraulique supplémentaire (26).

2. Moteur d'aéronef selon la revendication 1, **caractérisé en ce qu'**une ouverture (32) du trajet de conduction hydraulique supplémentaire (26) est disposée pour prélever de l'huile sur le réservoir d'huile (23) à la hauteur du niveau de remplissage défini (25) du réservoir d'huile (23).

3. Moteur d'aéronef selon l'une quelconque des revendications 1 et 2, **caractérisé en ce qu'**une zone de transfert (33) est prévue par laquelle de l'huile peut être introduite du réservoir d'huile (23) au trajet de conduction hydraulique supplémentaire (26) dès que le niveau de remplissage défini (25) du réservoir d'huile (23) est atteint.

4. Moteur d'aéronef selon l'une quelconque des revendications 1 à 3, **caractérisé en ce que** le trajet de conduction hydraulique (24) présente une pompe (27) permettant de débiter de l'huile du réservoir d'huile (23) à la transmission (5).

5. Moteur d'aéronef selon la revendication 4, **caractérisé en ce que** la pompe (27) peut être entraînée par la transmission (5).

6. Moteur d'aéronef selon la revendication 4 ou 5, **caractérisé en ce que** la liaison active entre la transmission (5) et la pompe (27) peut être activée ou désactivée.

7. Moteur d'aéronef selon l'une quelconque des revendications 4 à 6, **caractérisé en ce que** le trajet de conduction hydraulique (24) comprend dans la zone entre la pompe (27) et la transmission (5) une unité de soupape (30) par laquelle de l'huile débitée par la pompe (27) à partir du réservoir d'huile (23) peut être guidée au choix en direction de la transmission (5) ou de retour au réservoir d'huile (23) ou peut être introduite sur le trajet de conduction hydraulique supplémentaire (26).

8. Moteur d'aéronef selon l'une quelconque des revendications 1 à 7, **caractérisé en ce que** le dispositif de séparation d'huile (35) comprend un séparateur à impact (36).

9. Moteur d'aéronef selon l'une quelconque des revendications 1 à 8, **caractérisé en ce que** le dispositif de séparation d'huile (35) est réalisé avec un milieu poreux (53) par lequel un débit volumique air/huile sortant de la transmission (5) peut être guidé en partant de l'entrée (34) en direction de l'ouverture (32) du trajet de conduction hydraulique supplémentaire (26), l'huile séparée du débit volumique air/huile s'écoulant en direction du réservoir d'huile (23) au niveau du milieu poreux (53).

10. Moteur d'aéronef selon l'une quelconque des revendications 2 à 9, **caractérisé en ce qu'**entre l'ouverture (31) du trajet de conduction hydraulique (24) et l'ouverture (32) du trajet de conduction hydraulique supplémentaire (26), un dispositif de retenue (41) est prévu qui limite au moins un courant d'huile dans le réservoir d'huile (23) en partant d'une zone (38A) du réservoir d'huile (23) associée à l'ouverture (31) du trajet de conduction hydraulique (24) en direction de l'ouverture (32) du trajet de conduction hydraulique supplémentaire (26).

11. Moteur d'aéronef selon la revendication 10, **caractérisé en ce qu'**une zone de carter (40) du réservoir d'huile (23) qui limite la zone (38A) de l'espace intérieur (38) du réservoir d'huile (23), associée à l'ouverture (31) du trajet de conduction hydraulique (24), est réalisée sous forme d'entonnoir au moins par endroits.

12. Moteur d'aéronef selon la revendication 10 ou 11, **caractérisé en ce que** le dispositif de retenue (41) présente au moins une paroi de retenue (51) s'étendant entre une ouverture (31) du trajet de conduction hydraulique (24) pour prélever de l'huile sur le réservoir d'huile (23) et l'ouverture (32) du trajet de conduction hydraulique supplémentaire (26), et réalisée avec au moins un passage (42), le passage (42) représentant respectivement un raccordement entre une zone intérieure (38A) du réservoir d'huile (23) limitée par la paroi de retenue (51) et sur laquelle débouche le trajet de conduction (24), et une zone intérieure (38B) supplémentaire du réservoir d'huile (23), limitée par la paroi de retenue (51), sur laquelle débouche le trajet de conduction supplémentaire (26).

13. Moteur d'aéronef selon la revendication 12, **caractérisé en ce que** la paroi de retenue (51) est réalisée sous forme d'entonnoir au moins par endroits.

14. Moteur d'aéronef selon la revendication 13, **caractérisé en ce que** la zone en forme d'entonnoir de la zone de carter (40) du réservoir d'huile (23) et la zone en forme d'entonnoir de la paroi de retenue (51) sont adaptées l'une à l'autre de telle sorte que dans la zone (38A) de l'espace intérieur (38) du réservoir d'huile (23), associée à l'ouverture (31) du trajet de conduction hydraulique (24), un volume d'huile défini peut être retenu par le dispositif de retenue (41) pendant des attitudes de l'avion différentes d'un vol en palier d'un avion réalisé avec le moteur d'aéronef (1).

15. Moteur d'aéronef selon l'une quelconque des revendications 10 à 14, **caractérisé en ce qu'**une entrée (34) du réservoir d'huile (23) est reliée à un tuyau d'amenée perforé (45) du dispositif de séparation d'huile (35), dans lequel le tuyau d'amenée perforé (45) comprend une zone de tuyau (46) s'étendant substantiellement au-dessus du dispositif de retenue (41) et un raccord coudé (47) disposé entre l'entrée (34) et la zone de tuyau (46) au niveau duquel un courant volumique air/huile entrant par l'entrée (34) est dévié et l'huile peut être séparée du courant volumique air/huile, alors que la zone de tuyau (46) est réalisée avec plusieurs perçages (48) permettant d'évacuer un courant volumique air/huile et de l'huile séparée dans le tuyau d'amenée perforé (45).

16. Moteur d'aéronef selon l'une quelconque des revendications 1 à 15, **caractérisé en ce que** le dispositif de séparation d'huile (35) comprend un prolongement d'une entrée (34) du réservoir d'huile (23) pour un courant volumique air/huile pouvant être évacué de la transmission (5), qui s'étend en partant d'une paroi de limitation supérieure (37) en direction d'une paroi de limitation inférieure (40) du réservoir d'huile (23) à travers le dispositif de retenue (41) dans le réservoir d'huile (23), dans lequel le courant volumique air/huile entrant dans le réservoir d'huile (23) par l'entrée (34) peut être introduit de l'entrée (34) au volume d'huile stocké dans le réservoir d'huile (23) lorsque le prolongement de l'entrée (34) plonge dans le volume d'huile stocké dans le réservoir d'huile (23).

17. Moteur d'aéronef selon l'une quelconque des revendications 1 à 16, **caractérisé en ce que** le dispositif de séparation d'huile (35) est réalisé avec un cyclone (50) qui est réalisé de manière linéaire ou convergente en partant d'une entrée (34) du réservoir d'huile (23) pour un courant volumique air/huile pouvant être évacué de la transmission (5) en direction d'une sortie (49) du cyclone (50).
